(19) Europäisches Patentamt
European Patent Office
Office européen des brevets

(11) **EP 1 756 771 B1**

(12) **FASCICULE DE BREVET EUROPEEN**

(45) Date de publication et mention de la délivrance du brevet:
**12.01.2011 Bulletin 2011/02**

(51) Int Cl.:
*G06T 7/00* [(2006.01)]   *H04N 13/00* [(2006.01)]
*G01C 11/02* [(2006.01)]

(21) Numéro de dépôt: 05744514.0

(22) Date de dépôt: **29.03.2005**

(86) Numéro de dépôt international:
**PCT/FR2005/000752**

(87) Numéro de publication internationale:
**WO 2005/093655 (06.10.2005 Gazette 2005/40)**

(54) **APPARIEMENT FIN D'IMAGES STEREOSCOPIQUES ET INSTRUMENT DEDIE AVEC UN FAIBLE COEFFICIENT STEREOSCOPIQUE**

FEIN-STEREOSKOPISCHER BILDVERGLEICH UND DEDIZIERTES INSTRUMENT MIT EINEM GERINGEN STEREOSKOPISCHEN KOEFFIZIENT

FINE STEREOSCOPIC IMAGE MATCHING AND DEDICATED INSTRUMENT HAVING A LOW STEREOSCOPIC COEFFICIENT

(84) Etats contractants désignés:
**AT BE BG CH CY CZ DE DK EE ES FI FR GB GR HU IE IS IT LI LT LU MC NL PL PT RO SE SI SK TR**

(30) Priorité: **26.03.2004 FR 0403143**

(43) Date de publication de la demande:
**28.02.2007 Bulletin 2007/09**

(73) Titulaire: **CENTRE NATIONAL D'ETUDES SPATIALES**
**75001 Paris (FR)**

(72) Inventeurs:
• **ROUGE, Bernard**
 **F-31400 Toulouse (FR)**
• **VADON, Hélène**
 **31500 Toulouse (FR)**
• **GIROS, Alain**
 **31780 Castelginest (FR)**

(74) Mandataire: **Callon de Lamarck, Jean-Robert et al**
**Cabinet Regimbeau**
**20 rue de Chazelles**
**75847 Paris cedex 17 (FR)**

(56) Documents cités:
EP-A- 0 037 530     US-A- 5 550 937
US-A- 5 963 664     US-A- 5 995 681
US-A1- 2002 113 864   US-A1- 2002 135 468

## Description

La présente invention concerne le domaine de la stéréoscopie. En particulier, l'invention concerne un procédé et un ensemble d'acquisition et d'appariement fin d'un couple stéréoscopique d'images.

C'est-à-dire que l'invention concerne un procédé et un système permettant l'acquisition et la mise en correspondance des points d'une première image avec les points d'une deuxième image formant un couple stéréoscopique d'images.

PRESENTATION GENERALE DE L'ART ANTERIEUR

La stéréoscopie est un procédé donnant l'impression de relief à partir d'un couple d'images 2D (ou deux dimensions) représentant une scène ayant été acquise avec des points de vue différents.

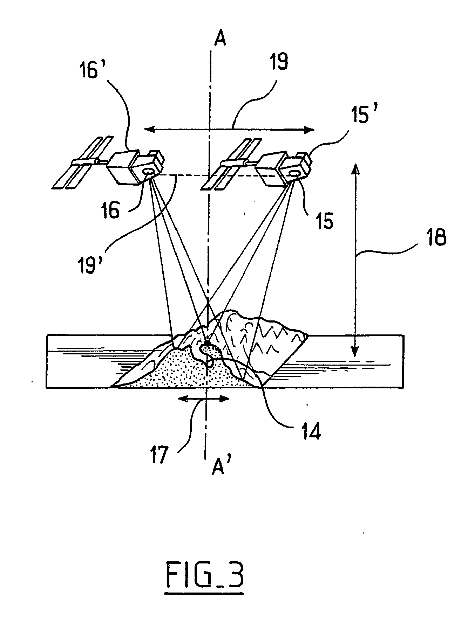

Tel qu'illustré à la figure 3, deux images formant un couple stéréoscopique d'images sont acquises à l'aide de deux capteurs CCD (Charge Couple Device) (matrices ou barrettes) 15, 16 situés dans le même plan focal 19' et symétriques par rapport à la droite A-A' passant par le centre de la scène observée et perpendiculaire au plan focal 19'.

Ces capteurs CCD vont permettre l'acquisition de deux images de la scène observée située à une certaine distance 18 des capteurs CCD.

Du fait de l'écartement 19 des deux capteurs CCD qui les ont acquises, ces deux images ne sont pas sans relation. Ainsi, une scène verra ses images décalées d'une image du couple à l'autre. Ce décalage est appelé disparité.

Le système stéréoscopique le plus élaboré à l'heure actuelle est le système visuel humain. L'homme dispose de deux yeux situés dans le même plan focal comprenant chacun un cristallin (système optique) et une rétine (capteur CCD). Ces yeux lui permettent de percevoir son environnement de deux points de vue légèrement différents. La fusion mentale de ces deux vues lui permet d'engendrer une image spatiale (3D) de son environnement.

Les méthodes de traitement d'images stéréoscopiques essaient, par des calculs mathématiques, de modéliser ce que notre cerveau fait sans difficulté. Le principe consiste dans un premier temps à mettre en correspondance les points des images du couple stéréoscopique d'images. Dans un deuxième temps, on reconstruit les coordonnées 3D des points de la scène observée en calculant l'intersection des droites passant par les points appariés et par les centres optiques des capteurs CCD.

La principale difficulté rencontrée lors de la mise en place d'une telle méthode est justement de mettre un à un en correspondance les points des images du couple. En effet, les deux images du couple n'étant pas prises sous la même incidence, un point donné de la scène dont la position dans la première image est donnée par les cordonnées $(X1,Y1)$, aura pour coordonnées $(X2,Y2)$ dans la deuxième image, avec $X1 \neq X2$ et $Y1 \neq Y2$.

Cet écart de position entre les projections sur les capteurs CCD d'un point donné de la scène observée dont les deux images se forment sur des points géométriquement non correspondants est appelé disparité géométrique. Dans la suite, le terme « d'écarts de position » sera préféré au terme « disparité » bien qu'ils aient tous deux la même signification.

Il a déjà été proposé un certain nombre de méthodes permettant l'appariement des points de 2 images prises sous 2 angles différents. Ces méthodes utilisent souvent le principe de corrélation pour faire correspondre les points d'une image à l'autre et donc déterminer les écarts de position.

Le principe de la corrélation est fondé sur la mesure d'une ressemblance locale entre deux images. Cette ressemblance locale s'effectue en introduisant des fenêtres pondérées (ou matrice de coefficients) centrées sur les voisinages homologues au sens du positionnement géométrique dans l'image. Ces fenêtres pondérées sont appelées fenêtres de corrélation.

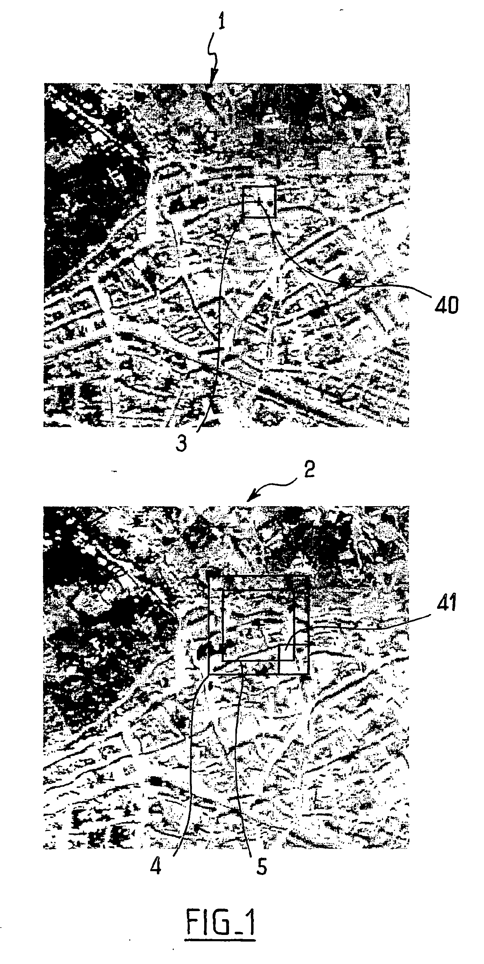

Comme présenté sur la figure 1, le procédé consiste à se donner une fenêtre 3 de corrélation centrée sur le point 40 étudié de la première image 1, et à rechercher son homologue 41 au sens radiométrique sur la deuxième image 2. Cette opération est réalisée par déplacement (dans la deuxième image) de la fenêtre de corrélation 3 dans une fenêtre plus importante appelée aire de recherche 4. L'aire de recherche 4 est centrée sur l'homologue géométrique estimé 42 du point courant 40 de la première image. Le tableau des valeurs de corrélation obtenues constitue la nappe de corrélation. On retient alors l'écart de position pour lequel la valeur de corrélation est maximale.

Lorsque l'on effectue l'appariement des points d'un couple stéréoscopique d'images par corrélation, la première image sert de référence, et l'on cherche à retrouver, pour chaque point de la première image, son homologue radiométrique dans la deuxième image.

Cette opération est réalisée successivement sur un sous ensemble ou sur tous les points de la première image. Le point de la première image étudié à un instant donné sera dans la suite appelé point courant. Chaque point de la première image peut être considéré comme un signal que l'on cherche à retrouver dans la deuxième image par corrélation. Un point 40 de la première image et un point 41 de la deuxième image sont des homologues radiométriques s'ils correspondent au même point de la scène représentée dans les images du couple stéréoscopique.

A partir de deux images 2D formant un couple stéréoscopique d'images il est possible, une fois les points des deux images du couple appariés, de déterminer la coordonnée en Z d'un point de la scène ayant pour coordonnées (X1, Y1) dans la première image, et (X2, Y2) dans la deuxième image du couple.

En l'absence de perturbations (microvibrations par exemple) la précision sur la détermination de la troisième coordonnée d'un point de la scène aussi connue sous le nom de précision altimétrique est proche de :

$$\dot{dz} = d\varepsilon / (b/h),$$

- *d*ε est la précision 17 de la restitution de la disparité, et
- b/h est le coefficient stéréoscopique avec
- b est la distance 19 entre les deux capteurs CCD situés dans le même plan focal, et
- h la distance 18 entre les capteurs CCD et la scène visée.

Les méthodes qui utilisent le principe de corrélation pour apparier chaque point de la première image avec son homologue radiométrique dans la deuxième image ne permettent pas d'obtenir une bonne précision sur la restitution de la disparité (*d*ε). En effet, le défaut majeur du procédé de corrélation est un phénomène dit « d'adhérence » aux zones les plus singulières des images du couple stéréoscopique, comme par exemple les contours. Le phénomène d'adhérence est causé notamment par la taille de la fenêtre de corrélation utilisée pour appareiller les points du couple d'images.

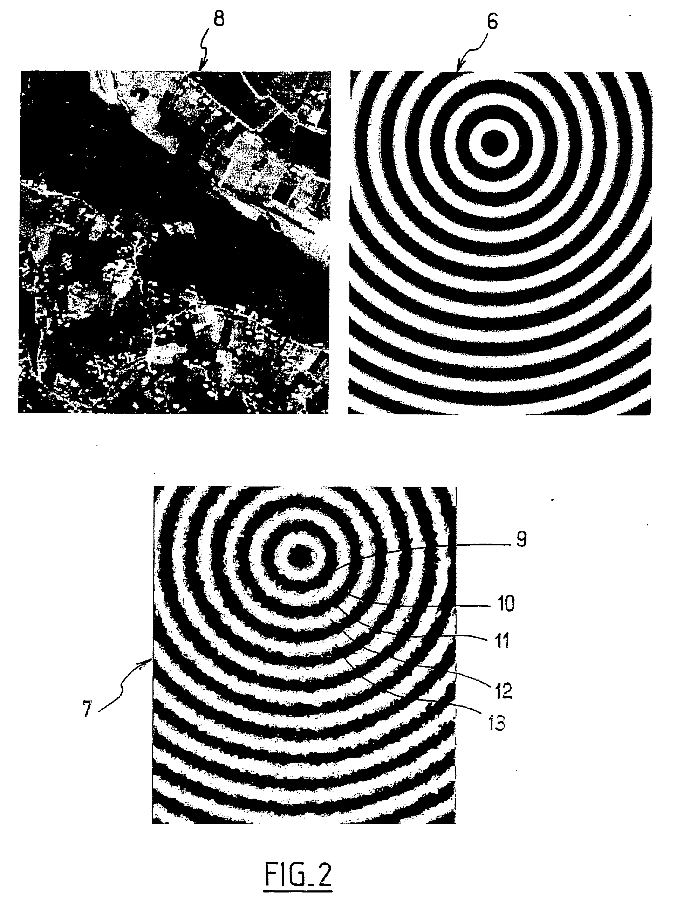

Ce phénomène d'adhérence est mis en évidence à la figure 2 sur un décalage 6 sinusoïdal de révolution de période 35 et d'amplitude +/- 0.5, la mesure 7 de ce décalage 6 par corrélation avec une fenêtre de corrélation de taille 15x15 de type prolate et la première image 9. La mesure 7 de ce décalage par corrélation fait apparaître le défaut majeur de la corrélation au niveau des contours 9,10,11, 12, 13, de l'image 7.

Pat conséquent, l'utilisation du principe de corrélation pour déterminer les écarts de position entre les points de deux images stéréoscopiques nécessite d'avoir un fort coefficient stéréoscopique (b/h) afin de diminuer linéairement l'erreur altimétrique, ou erreur dans la détermination de la troisième coordonnée Z d'un point de la scène représentée dans le couple d'images. En effet, comme illustré par l'équation ci-dessus, l'erreur altimétrique est inversement proportionnelle au coefficient stéréoscopique. Inversement les faibles coefficients stéréoscopiques augmentent linéairement l'erreur altimétrique.

Le document US-A-5 963 664 écrit un système de traitement d'un couple stéréoscopique d'images dans lequel on détermine des écarts de position entre chaque point de la première et son homologue dans la deuxième image pour différents niveaux de résolution.

Le document US-A-5 995 681 décrit un système de traitement d'images stéréoscopiques dans lequel les écarts de position entre les points de la première image et leurs homologues respectifs dans la deuxième image sont déterminés sur la base de la corrélation.

Le document US-A-2002/135468 décrit un système d'acquisition d'un couple stéréoscopique d'images comportant un instrument d'acquisition unique incluant deux capteurs CCD disposés dans le même plan focal.

Le document EP-A-0 037 530 décrit un dispositif pour un balayage ligne par ligne d'objet à partir d'un avion ou d'un satellite. Le dispositif comprend un objectif unique dans le plan focal duquel sont situées plusieurs barrettes de détecteurs permettant l'acquisition d'un couple stéréoscopique d'images.

Un des buts de la présente invention est de fournit une méthode d'appariement d'un couple stéréoscopique d'images ne présentant pas les inconvénients de la méthode précédemment décrite, et ainsi permettre la mise en place d'une méthode permettant l'appariement précis des points d'un couple stéréoscopique d'images pour de faibles coefficients stéréoscopiques.

L'appariement des points d'un couple stéréoscopique d'images est réalisé par l'élaboration de cartes des écarts de position. La position de chaque point de la carte des écarts de position correspond à la position d'un point de la première image, et la valeur de chaque point de la carte des écart de position représentent l'écart de position entre le point de la première image et son homologue radiométrique dans la deuxième image. Par exemple, la valeur du point de coordonnées (A, B) de la carte des écarts de position est représentative de l'écart de position entre le point de coordonnées (A, B) de la première image et son homologue radiométrique dans la deuxième image.

Comme il a été précédemment mentionné, les méthodes d'appariement d'un couple stéréoscopique d'images basées sur le principe de corrélation ne permettent d'obtenir un appariement précis des points que pour un coefficient stéréoscopique fort.

Le coefficient stéréoscopique (b/h) est le rapport entre l'écartement 19 entre les deux capteurs CCD 15, 16 situés dans le même plan focal 19' (cf. figure 3), et la distance 18 entre la scène visée et les capteurs CCD.

La distance 18 entre la scène observée et les capteurs CCD dépendant de l'application, l'écartement 19 entre les capteurs CCD 15, 16 doit être prévu suffisant pour avoir un fort coefficient stéréoscopique.

Les systèmes d'acquisition et d'appariement de couple stéréoscopique d'images comprennent un système d'acquisition et un système de traitement. Ces deux systèmes sont en général distants et communiquent par des moyens de communication avec ou sans fil.

Les systèmes de traitement permettent l'appariement d'un couple stéréoscopique d'images. Ces systèmes mettent en oeuvre les méthodes d'appariement d'un couple stéréoscopique. Dans le cas d'un système de traitement mettant en oeuvre une méthode basée sur le principe de corrélation, il est donc nécessaire d'avoir un fort coefficient stéréoscopique pour un appariement précis des images d'un couple.

Les systèmes d'acquisition de couple stéréoscopique d'images fournissant aux systèmes de traitement les images à traiter doivent donc être conçus de sorte qu'ils respectent cette condition (coefficient stéréoscopique fort du couple d'images).

Dans le cas d'un système spatial d'acquisition d'un couple stéreoscopique d'images, la distance 18 entre le système d'acquisition et la scène observée est très grande.

Par conséquent, l'écartement 19 entre les capteurs CCD du système d'acquisition doit être très important pour avoir un fort coefficient stéréoscopique. L'importance de cet écartement implique que les systèmes spatiaux d'acquisition de couple stéréoscopique d'images comprennent deux instruments optiques 15', 16' (satellite) comprenant chacun un capteur CCD 15, 16.

La présence, dans les systèmes spatiaux d'acquisition, de deux instruments optiques 15', 16' comprenant chacun un capteur CCD 15, 16 induit une plus grande complexité dans l'appariement d'image, et un coût plus important pour la conception et la mise sur orbite de tels systèmes spatiaux d'acquisition.

En vision de prés (appareils photos par exemple), l'acquisition d'images stéréoscopiques nécessite la présence de deux systèmes optiques dans le système d'acquisition.

Un autre but de la présence invention est de fournir un ensemble d'acquisition et d'appariement d'un couple stéréoscopique d'images comprenant un système d'acquisition simplifié permettant l'acquisition d'un couple pour un faible coefficient stéréoscopique et un système de traitement mettant en oeuvre la méthode d'appariement d'un couple stéréoscopique d'images selon la présente invention.

PRESENTATION DE L'INVENTION

L'invention concerne un système de traitement pour un ensemble d'acquisition et d'appariement d'un couple stéréoscopique d'images conforme à la revendication 1

Des aspects préférés, mais non limitatifs du système de traitement selon l'invention sent les suivants:

- les moyens aptes à traiter les deux images du couple comprennent en outre :

    - des moyens aptes à effectuer une convolution des images du couple par une fenêtre de convolution,
    - des moyens aptes à effectuer un zoom de taille 2 des images du couple stéréoscopique;

- les moyens aptes à déterminer la fenêtre de corrélation optimale en chaque point de la première image comprennent :

    - des moyens aptes à calculer une courbure de la première image pour chaque taille de fenêtre de corrélation,
    - des moyens aptes à calcule une courbure de l'image de bruit pour chaque taille de fenêtre de corrélation,
    - des moyens aptes à calculer, pour chaque taille de fenêtre de corrélation, le rapport (SNRc) des courbures précédentes,

    et des moyens aptes à choisir la plus petite taille de fenêtre de corrélation telle que ledit rapport soit supérieur à un paramètre d'exhaustivité saisi par l'utilisateur.
- les moyens aptes à traiter les deux images comprennent en outre des moyens aptes à effectuer une interpolation de la deuxième image grâce à une carte des écarts de position obtenue pour un niveau de résolution précédent.
- les moyens aptes à traiter les deux images comprennent en outre :

    - des moyens aptes à rejeter les points homologues issus de fenêtres de corrélation de plus grandes tailles et contenant des fenêtres de corrélation de plus petites tailles,
    - des moyens aptes à rejeter les points homologues (40, 41) de rayons de courbure vérifiant une condition de rejet après interpolation de là deuxième image (2),
    - des moyens aptes à compléter itérativement, dans la carte des écarts de position correspondant au niveau de résolution courant, des points d'écarts de position lacunaires en fonction des points d'écarts de position existants,
    - des moyens aptes à lisser la carte des écarts de position correspondant an niveau de résolution courant par une fenêtre de convolution,

- des moyens aptes à composer la carte des écarts de position calculée pour le niveau de résolution courant avec la carte des écarts de position calculée pour le précédent niveau de résolution afin de mettre à jour ladite carte des écarts de position calculée pour le niveau de résolution précédent,

le système de traitement comporté en outre des moyens aptes à rejeter les points homologues vérifiant une condition de rejet, lesdits moyens aptes à rejeter les points homologues comprenant :

- des moyens qui, pour le point courant, sont aptes à calculer sur la première image les courbures de ses deux points voisins suivant chaque direction de traitement,
- des moyens qui, pour le point courant, sont aptes à calculer l'écart inférieur des courbures des 4 connexes au point courant de la première image,
- des moyens qui, pour le point courant, sont aptes à calculer, dans la deuxième image, son point homologue interpolé par la carte des écarts déposition,
- des moyens qui, pour le point courant, sont aptes à calculer l'écart entre sa courbure et celle du point homologue,
- des moyens qui, pour le point courant, sont aptes à rejeter le point homologue si cet écart est plus important que l'écart inférieur calcule sur la première image.

L'invention concerne également un procédé d'appariement d'un couple stéréoscopique d'images conforme à la revendication 7

Des aspect préfères mais non limitatifs du procédé selon l'invention sont les suivants :

- le procédé comporte en outre l'étape :

    - d'acquisition d'un couple stéréoscopique d'images par un instrument d'acquisition unique destiné à fonctionner avec des coefficients stéréoscopiques de quelques centièmes et comprenant deux capteurs CCD dans le plan focal optique, chaque capteur permettant l'acquisition d'une image du couple.

- le procédé comporte en outre une étape consistant à traiter grâce à des moyens de traitement les deux images du couple stéréoscopique selon une direction épipolaire.
- le procédé comporte une étape consistant à traiter grâce à des moyens de traitement les deux images du couple stéréoscopique selon une direction épipolaire et une direction orthogonale à la direction épipolaire.
- le procédé comprend en outre une étape de saisie par un utilisateur d'au moins un paramètre d'exhaustivité correspondant au choix d'un rapport signal sur bruit de corrélation suivant chaque direction de traitement.
- le procédé comporte en outre une étape d'acquisition de données comprenant l'acquisition:

    - d'une image de bruit par chaque capteur CCD,
    - du type de la fenêtre de corrélation,
    - d'une direction épipolaire pour chaque image du couple pour un coefficient stéréoscopique moyen,
    - d'au moins une valeur de l'écart de position maximum suivant chaque direction de traitement.

- le procédé comprend en outre une étape de prétraitement des données consistant à :

    calculer un nombre de niveaux de résolution suivant chaque direction de traitement en fonction de chaque valeur de l'écart de position maximum,
    - filtrer les images du couple stéréoscopique d'images par convolution avec une fenêtre de convolution,
    - filtrer l'image de bruit par convolution avec ladite fenêtre de convolution,
    - interpoler dans une géométrie épipolaire le couple stéréoscopique d'images.

- l'étape de traitement des images comprend en outre les étapes consistant à :

    - effectuer une convolution des images du couple par une fenêtre de convolution
    - effectuer un zoom de taille 2 des images du couple stéréoscopique.

- l'étape de détermination de la fenêtre de corrélation optimale consiste à, pour chaque point de la première image :

    - calculer une courbure de la première image pour chaque taille de fenêtre de corrélation,
    - calculer une courbure de l'image de bruit pour chaque taille de fenêtre de corrélation,
    - calculer, pour chaque taille de fenêtre de corrélation, le rapport (SNRc) des courbures précédentes,

et à choisir la plus petite taille de fenêtre de corrélation telle que ledit rapport soit supérieur à chaque paramètre d'exhaustivité saisi par l'utilisateur.

- l'étape de traitement des images comprend en outre une étape consistant à effectuer une interpolation de la deuxième image grâce à une carte des écarts de position obtenue pour un niveau de résolution précédent.
- l'étape de traitement des images comprend en outre les étapes consistant à :

  - rejeter les points homologues issus de fenêtres de corrélation de plus grandes tailles et contenant des fenêtres de corrélation de plus petites tailles,
  - rejeter les points homologues de rayons de courbure vérifiant une condition de rejet après interpolation de la deuxième image,
  - compléter itérativement, dans la carte des écarts de position correspondant au niveau de résolution courant, des points d'écarts de position lacunaires en fonction des points d'écarts de position existants,
  - lisser la carte des écarts de position correspondant au niveau de résolution courant par une fenêtre de convolution,
  - composer la carte des écarts de position calculée pour le niveau de résolution courant avec la carte des écarts de position calculée pour le précédent niveau de résolution afin de mettre à jour ladite carte des écarts de position calculée pour le niveau de résolution précédent.

- l'étapè de rejet des points homologues vérifiant une condition de rejet consiste à, pour le point courant :

  - calculer sur la première image les courbures de ses deux points voisins suivant chaque direction de traitement,
  - calculer l'écart inférieur des courbures des 4 connexes an point courant de la première image,
  - calculer, dans la deuxième image, son point homologue interpolé par la carte des écarts de position,
  - calculer l'écart entre sa courbure et celle du point homologue,
  - rejeter le point homologue si cet écart est plus important que l'écart inférieur calculé sur la première image.

- l'étape d'obtention, pour le niveau de résolution le plus fin, de la carte des écarts de position, comprend l'obtention :

  - d'au moins un tableau représentant la carte des écarts de position suivant chaque direction de traitement,
  - d'au moins un tableau représentant une carte des tailles des fenêtres de corrélation employées en tout point non rejeté de la première image, solvant chaque direction de traitement.
  - les fenêtres de convolution et de corrélation utilisées sont des fenêtres de convolution et de corrélation de type prolate.

L'invention concerne également un ensemble d'acquisition et d'appariement d'un couple stéréoscopique d'images conforne à la revendication 27

PRESENTATION DES FIGURES

D'autres caractéristiques et avantages de l'invention ressortiront encore de la description qui suit, laquelle est purement illustrative et non limitative et doit être lue en regard des dessins annexés, sur lesquels :

- La figure 1 illustre une scène représentée dans un couple stéréoscopique d'images;
- la figure 2 illustre une vue d'une scène de la composante en colonnes, d'un décalage sinusoïdal injecté, et du résultat de la mesure de ce décalage par corrélation;
- La figure 3 illustre une vue en perspective d'un système de stéréoscopie;
- La figure 4 illustre un graphique représentant le taux de corrélation suivant une direction d'une image de type SPOT5 en fonction de l'écart de position entre le point courant de la première image et le point courant de la deuxième image, le point courant correspondant dans chaque image au point corrélé ou point au centre de la fenêtre SPOT5 (cf. p 23);
- La figure 5 illustre un graphique représentant le taux de corrélation d'une fenêtre de type hypomode carré 2X2 en fonction de l'écart de position entre le point courant de la première image et le point courant de la deuxième image, le point courant correspondant dans chaque image au point corrélé ou point au centre de la fenêtre ;
- La figure 6 illustre un graphique représentant le taux de corrélation d'une fenêtre de type prolate en fonction de l'écart de position entre le point courant de la première image et le point courant de la deuxième image, le point courant correspondant dans chaque image au point corrélé ou point au centre de la fenêtre ;
- La figure 7 illustre une vue d'une scène, des points de la scène conservés après application d'un critère en ligne, des points de la scène conservés après application d'un critère en colonne, et des points de la scène conservés après application d'un critère en ligne et en colonne ;

- La figure 8 est un graphique de la variation de la précision altimétrique en fonction du coefficient stéréoscopique pour quatre méthodes différentes d'appariement d'images stéréoscopiques (fenêtres créneaux, prolates, prolates + recalage barycentrique) ;
- La figure 9 illustre une vue d'un instrument dédié à la stéréoscopie ;
- La figure 10 illustre une vue en perspective de deux images formant un couple stéréoscopique d'images et de la scène observée ;
- La figure 11 illustre une vue d'un couple d'images présentant chacune trois réponses impulsionnelles ou fonction de transfert de modulation (FTM) ;
- La figure 12 illustre des étapes de corrélation et de recalage barycentrique du procédé d'appariement d'image.

## DESCRIPTION D'UN MODE DE REALISATION DE L'INVENTION

La présente invention va maintenant être détaillée en référence aux figures 1 à 12. Les éléments équivalents représentés dans les différentes figures porteront les mêmes références numériques.

Le procédé ci-présenté permet le calcul de cartes précises des écarts de position entre images de couples stéréoscopiques ayant des coefficients stéréoscopiques faibles avec la même précision altimétrique que pour des coefficients stéréoscopiques forts. Ce procédé fonctionne jusqu'à des coefficients stéréoscopiques très faibles (0.01) sans dégrader la précision altimétrique.

On entend, dans le cadre de la présente invention, par « coefficient stéréoscopique faible », un coefficient stéréoscopique de quelques centièmes, plus précisément, un coefficient stéréoscopique inférieur à 0,1, plus précisément encore compris entre 0,1 et 0,01 (i.e. compris entre un dixième et un centième).

Pour acquérir et apparier un couple stéréoscopique d'images à faible coefficient stéréoscopique, on présentera un ensemble d'acquisition et d'appariement comprenant un système d'acquisition pour l'acquisition d'un couple stéréoscopique d'images à faible coefficient stéréoscopique, et un système de traitement permettant le traitement du couple stéréoscopique d'images acquis.

L'acquisition d'un couple stéréoscopique d'images à faible coefficient stéréoscopique (b/h faible) présente l'avantage de limiter les parties cachées, c'est-à-dire des parties n'apparaissant que dans l'une des deux images, et par exemple de voir le fond des rues en ville. En effet, comme l'illustre la figure 3, les parties cachées 14, sont liées à l'acquisition par un capteur CCD 15 ou 16 d'une prise de vue oblique 2D d'un objet 3D. Aussi, l'acquisition sous coefficient stéréoscopique faible permet une mise en oeuvre plus automatique de la réalisation des cartes des écarts de position entre couples d'images en évitant la gestion, toujours laborieuse, des parties cachées.

Les différentes étapes ayant conduit à la détermination du procédé et du système vont maintenant être présentées.

Les modèles utilisés en traitement d'image sont des modèles discrets. Cependant, il est souvent plus facile de commencer par raisonner sur un modèle continu, et de passer ensuite au cas discret. C'est cette approche qui est utilisée dans la suite pour décrire la méthode d'appariement d'image.

### 1. Modélisation continue de la corrélation unidirectionnelle

La détermination du modèle continu de la corrélation unidirectionnelle va conduire à l'obtention d'une équation permettant de relier la mesure de l'écart de position effectuée par l'opération de corrélation suivant une direction de traitement en fonction de la valeur réelle de l'écart de position. Cette équation mettra en évidence le défaut précédemment indiqué de la corrélation, dit "adhérence". Un traitement permettant de limiter ce phénomène d'adhérence sera ensuite présenté. Enfin, une seconde relation, à savoir une condition morphologique directionnelle locale dont dépend la précision de l'écart de position mesuré sera également obtenue à l'issue de la modélisation continue de la corrélation unidirectionnelle.

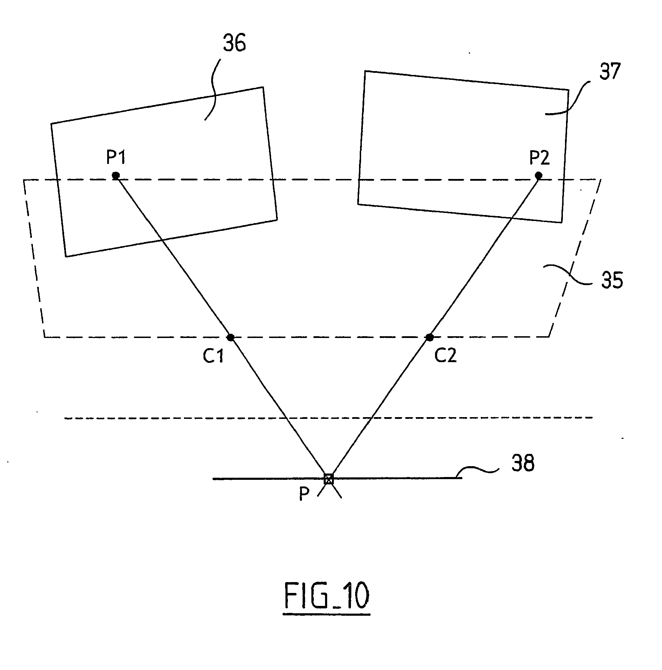

Dans cette partie, il est fait l'hypothèse d'une direction unique des cartes des écarts de position, par exemple suivant des droites dites épipolaires, et dont une définition va maintenant être donnée. Comme illustré à la figure 10, dans un couple stéréoscopique, on définit l'ensemble des plans épipolaires comme étant l'ensemble des plans passant par les deux centres optiques C1 et C2.

Les points P, P1 et P2 font respectivement partis de la scène 38, de la première image 36, et de la deuxième image 37 du couple stéréoscopique. Il apparaît que pour tous les points de la scène 38, le point P et ses points images P1 et P2 appartiennent au même plan épipolaire 35. Les droites intersection des plans images 36 et 37 avec le plan épipolaire 35 sont les droites épipolaires. Celles-ci sont connues puisque les positions des capteurs CCD C1 et C2 sont connues.

La formulation continue du coefficient de corrélation non linéaire est effectuée dans le cas d'un couple stéréoscopique d'images faiblement bruitées. Le coefficient de corrélation suivant la direction du vecteur unité $\vec{v}$ dans un

voisinage centré en {t} est:

$$\rho_t(\Delta t) = \frac{\int \varphi_t(x)\cdot I(x)\cdot \tilde{I}(x+\Delta t)dx}{\sqrt{\int \varphi_t(x)I^2(x)dx \ \int \varphi_t(x)\tilde{I}^2(x+\Delta t)dx}} = \frac{(\varphi_t \cdot I)\bullet \tilde{I}(\Delta t)}{\|I\|_{\varphi_t}\|\tilde{I}(\Delta t)\|_{\varphi_t}}.$$

($\bullet$ est l'opérateur de corrélation, I est l'image de référence, $\tilde{I}$ est l'image à apparier et $\varphi$ la fenêtre).

On cherche l'écart de position vectoriel $\Delta t$ qui maximise ce coefficient de corrélation. En effet, l'écart de position pour lequel la corrélation est maximale correspond à l'écart de position entre les coordonnées d'un point de la première image, et les coordonnées de son homologue radiométrique dans la deuxième image.

Soit u(t) la fonction vectorielle qui à tout point t de l'image associe $\Delta t$. Ce coefficient de corrélation est calculé à partir d'un rapport, il est donc non linéaire. Les écarts de position étant des différences de positions locales relatives, la recherche de l'écart de position maximisant le coefficient de corrélation peut être ramenée à une recherche autour du point $t_0=0$.

On obtient :

$$\rho_0(u_0) = \frac{\int \varphi \cdot I \cdot \tilde{I}(x+u_0)dx}{\sqrt{\int \varphi \cdot I^2(x)dx \int \varphi \cdot \tilde{I}^2(x+u_0)dx}}$$

où $\|I\|_{\varphi 0}$ est une constante, et u0 = u(0) = $\Delta t$, I est l'image de référence, $\tilde{I}$ est l'image à apparier et $\varphi$ la fenêtré.

L'objectif est de rechercher u0 tel que ce coefficient de corrélation soit maximum. La formule

$$\tilde{I}(x) = I(x+\vec{\varepsilon}(x))$$

permet le passage d'une image du couple stéréoscopique à l'autre par un « petit » déplacement de pixels (on donnera un sens particulier au terme « petit » par la suite). Un pixel est l'élément le plus petit d'une image auquel on puisse associer individuellement un niveau de gris représentatif d'une intensité.

En effectuant un développement limité au deuxième ordre, suivant la direction du vecteur unitaire $\vec{v}$ centré en {0} et après remplacement de $\tilde{I}$ par sa valeur approchée en fonction de I, le coefficient de corrélation devient :

$$\rho_v(u_0) = 1 - \frac{\varphi_0 * [I'(x)\cdot(\varepsilon_v(x)+u_0)]^2}{2\|I\|_{\varphi_0}^2} + \frac{\varphi_0 * [I(x)I'(x)\cdot(\varepsilon(x)+u_0)]^2}{2\|I\|_{\varphi_0}^4}$$

où I' est la dérive de I suivant $\vec{v}$.

Equation reliant la mesure de l'écart de position à sa valeur réelle

La recherche du maximum du coefficient de corrélation précédent conduit à rechercher l'annulation dans une direction quelconque de traitement de la dérivée de ce coefficient de corrélation.

Soit u la mesure de la valeur de l'écart de position suivant la direction $\vec{v}$ au point t correspondant au maximum du coefficient de corrélation ($\rho$'=0) et soit $\varepsilon$ l'écart de position réel suivant cette même direction.

L'équation fondamentale de la corrélation non linéaire est alors

$$u \cdot C = \varphi * [\varepsilon \cdot d(I,I')]$$

où $C = -\varphi*d$ est la courbure de corrélation suivant la direction $\vec{v}$, avec $\varphi$ la fenêtre de corrélation et

$$d(I,I') = \frac{I'^2 - II'A(t)}{\|I\|^2_{\varphi_t}}$$ est la quasi-densité de corrélation et $$A(t) = \frac{[\varphi * II']}{\|I\|^2_{\varphi_t}}$$. Elle ne dépend que de l'image de référence I et de sa dérivée.

Toutes les dérivées sont exprimées dans la direction de traitement $\vec{v}$.

Cette relation fondamentale de la corrélation permet de relier la mesure de l'écart de position effectué par l'opération de corrélation à la valeur réelle de l'écart de position, et ce sans passer par le calcul explicite de la corrélation, calcul toujours très coûteux en temps.

On remarque, en observant la formule permettant d'obtenir la quasi-densité de corrélation, que celle-ci est principalement fonction de $I'^2$. Cette quasi-densité de corrélation est donc très sensible aux contours, et plus généralement aux singularités (points où certaines quantités deviennent infinies). Pour pallier le problème d'adhérence suscité, on utilise une méthode dite de recalage barycentrique permettant de revenir à l'écart de position vrai. Cette méthode va maintenant être décrite.

Méthode de recalage barycentrique

La méthode dite de recalage barycentrique prend sa source dans la constatation suivante. L'équation fondamentale au point de coordonnée, par exemple 0, devient si l'image a une quasi-densité concentrée en {$x_0$'},

$$\varepsilon(x_0') \approx -u(0)$$

Ceci signifie que la mesure au point 0 est égale à l'écart de position vrai au point {$x_0$'} (au signe près). Il s'agit précisément du phénomène d'adhérence cité plus haut.

Le phénomène d'adhérence de l'image affecte au point courant l'écart de position vrai issu majoritairement d'un autre point plus singulier.

La méthode de recalage barycentrique va donc consister à rechercher la position la « plus singulière » dans la fenêtre de corrélation utilisée au point courant, et à affecter à cette position la plus singulière la valeur de l'écart de position mesurée au point courant.

La fenêtre de corrélation $\varphi$ est positive et l'on se place en 0. On recherche le barycentre sur le support de $\varphi$ dont la quasi-densité est $\varphi(x)d(x)$.

Il s'agit de la position :

$$\overrightarrow{OG} = \frac{\int \overrightarrow{OP}(x)\varphi(x)d(x)dx}{\int \varphi(x)d(x)dx}$$

où le vecteur $\overrightarrow{OP}$ décrit le support de $\varphi$. Si la masse est concentrée autour du centre de gravité alors l'intégrale se restreint au voisinage du centre de gravité $V(\overrightarrow{OG})$. De plus, l'écart de position peut être considéré comme constant dans ce petit voisinage.

D'où

$$\int \varepsilon(x)\varphi(x)d(x)dx \approx \int_{V(G)} \varepsilon(x)\varphi(x)d(x)dx \approx \varepsilon(x)C$$

Donc

$$\varepsilon(\overrightarrow{OG}) \approx -u(0)$$

Tous les termes de la relation précédente sont connus et donc calculables. Il suffit d'affecter la valeur mesurée du décalage u(0) au point de coordonnées G.

Une relation permettant de relier la mesure de l'écart de position effectuée par l'opération de corrélation à la valeur réelle de l'écart de position ainsi qu'un traitement permettant de palier au problème d'adhérence de la corrélation viennent donc d'être présentés. Comme indiqué dans la présentation du modèle, une seconde relation, à savoir une condition morphologique directionnelle locale va maintenant être déterminée.

Condition morphologique directionnelle locale

La recherche du maximum de la surface de corrélation permet de retrouver à partir d'un point de la première image son homologue radiométrique dans la deuxième image.

Cette recherche du maximum implique que la dérivée seconde du coefficient de corrélation soit strictement négative afin qu'il n'y ait pas plusieurs maximums à la surface de corrélation. En effet, la présence de plusieurs maximums à la nappe de corrélation rendrait ambiguë la détermination du point homologue.

L'expression de cette dérivée seconde suivant la direction $\vec{v}$ est appelée relation morphologique.

$$\rho'' = C$$

$\rho'' = C$ est appelé courbure de corrélation suivant la direction $\vec{v}$. La courbure doit être suffisante, et une expression quantitative en fonction du bruit va maintenant être donnée au terme "suffisante".

En admettant que la nature du bruit soit connue, par exemple un bruit Gaussien d'écart type σ et que ce bruit ait été régularisé par une Gaussienne g (écart type typique de 0.5 pas de quantification) $\overline{C_b} = \dfrac{-2\sigma^2 \|g'\| \mu(\varphi)}{\|I\|_\varphi^2}$ ,

ou $\mu(\varphi)$ est l'intégrale de $\varphi$.

Alors le rapport signal à bruit de courbure de corrélation se définit par :

$$SNR_C = \left| \frac{C}{\overline{C_b}} \right|$$

qui est indépendant de l'image.

La condition de corrélation est : $SNR_C$ supérieur à un seuil de l'ordre préférentiellement de 10 (un ordre de grandeur) qui permet de choisir les points retenus. Si cette condition est remplie, le bruit peut être négligé dans le calcul des relations fondamentales et morphologiques, et le modèle établi plus haut est applicable.

Une condition morphologique vient donc d'être établie. Cette condition morphologique ne dépend pas de l'écart de position. Il s'agit d'un résultat d'une importance pratique non négligeable. En effet, il est possible de vérifier en tout point de l'image la réalisation de cette condition et ceci sans recourir au calcul laborieux de la corrélation elle-même. Ce résultat justifie a posteriori le choix du coefficient de corrélation pondéré.

On a donc effectué ici la modélisation continue de la corrélation non linéaire unidirectionnelle. Il reste à passer au cas discret puisqu'une image est une suite de points et par conséquent un modèle discret.

2. Modélisation discrète de la corrélation non linéaire unidirectionnelle

La modélisation fine du calcul du coefficient de corrélation discret conduit, comme il va être précisé ici, à :

- effectuer un zoom de facteur 2 sur le couple d'images,

- choisir un type de fonction comme fenêtre de corrélation,
- interpoler les images d'entrée et la nappe de corrélation avec un filtre sinus cardinal.

Enfin un test d'arrêt des itérations pour une direction de traitement et un calcul multi niveaux de résolution, dit multiéchelle, seront effectués.

Echantillonnage

Après avoir effectué un échantillonnage de bonne qualité, c'est-à-dire $S = R$, où S est le support spectral de l'image et R la cellule réciproque correspondant à l'échantillonnage, on calcule le coefficient de corrélation entre les images numérisées d'un couple stéréoscopique. Ce calcul nécessite de bien exprimer II' et I'$^2$ qui "vivent" spectralement dans R+R que l'on nommera tout simplement 2R. Le calcul du coefficient de corrélation

$$\rho_0(u_0) = \frac{(\varphi_0 \cdot I) \bullet \tilde{I}(u_0)}{\|I\|_{\varphi_0} \sqrt{\varphi * \tilde{I}^2(u_0)}}$$ à partir de son numérateur et de son dénominateur nécessite un bon échantillonnage de l'image au carré.

Une solution préférée pour calculer le coefficient de corrélation est de calculer séparément numérateur et dénominateur, puis d'en réaliser le quotient. En effet, le calcul direct fait intervenir les dérivées au carré par exemple dans l'expression faisant intervenir $I'(x)^2$ (cf. relation fondamentale).

Ces deux calculs ne nécessitent bien évidemment qu'en apparence le même support spectral 2S. Le calcul direct s'effectue sur des termes bien plus Haute Fréquence (HF) (terme en I'$^2$) que celui où dénominateur et numérateur (terme seulement en I$^2$) sont calculés séparément avant d'en faire le quotient.

De plus, le calcul du dénominateur fait intervenir un carré de l'image.

Pour satisfaire aux conditions d'échantillonnage précédemment décrites, un zoom de deux sur les images du couple stéréoscopique est réalisé. Ce zoom consiste, pour chacune des images du couple stéréoscopique, à doubler le nombre de points en ligne en insérant un point de valeur inconnue entre deux points de l'image de valeurs connues, à doubler le nombre de points en colonne en insérant un point de valeur inconnue entre deux points de l'image de valeurs connues, et à déterminer par interpolation les valeurs inconnues en utilisant les valeurs connues. En effet, l'interpolation sur le zoom de deux est une estimation de valeurs intermédiaires dans une série de valeurs connues. L'interpolation sur le zoom de deux des images doit être précise.

La méthode utilise préférentiellement des filtres séparables d'interpolation longs de type sinus cardinal pour les diverses interpolations. La taille du filtre sinus cardinal d'interpolation de l'image pour effectuer un zoom sera préférentiellement de taille 35. Un filtre de type sinus cardinal sera également utilisé pour réaliser les interpolations sur la nappe de corrélation. On prendra préférentiellement un filtre sinus cardinal de taille 11 pour les interpolations sur la nappe de corrélation lors de la recherche sous pixellaire du maximum de corrélation.

Une fois le zoom de deux réalisé, on calcule le coefficient de corrélation entre les images numérisées du couple stéréoscopique. Comme décrit précédemment, une fenêtre 3 de corrélation est nécessaire pour calculer le coefficient de corrélation entre les deux images du couple. Les fenêtres de corrélation peuvent être de différents types. Cependant, certains types de fenêtres minimisent l'impact de l'erreur sur la mesure des écarts de position. L'analyse ayant conduit à la détermination d'un type préféré pour la fenêtre de corrélation va maintenant être présentée.

Détermination d'un type préféré pour la fenêtre de corrélation

Au voisinage du maximum, la nappe de corrélation doit être convexe afin d'assurer la convergence de l'algorithme de recherche du maximum principal. En effet, si la nappe de corrélation n'est pas convexe, cela signifie que plusieurs points de la deuxième image du couple d'images peuvent potentiellement correspondre au point courant dans la première image.

Or un seul de ces points est le juste point, c'est-à-dire l'homologue radiométrique vrai, du point courant de la première image. Pour une image de réponse impulsionnelle connue, le voisinage de taille maximum assurant cette propriété de convexité du maximum de la nappe va donc maintenant être recherché.

L'élément le plus fin qui puisse être trouvé sur une image est égal à la réponse impulsionnelle. Dès lors, il suffit d'étudier numériquement la forme de la nappe de corrélation pour un couple d'images identiques réduites à trois réponses impulsionnelles distantes de la longueur $\Delta l$ appartenant à l'intervalle en pixels [0;7], et de rechercher la distance maximum entre les deux réponses impulsionnelles préservant une nappe de corrélation convexe. Alors, cette valeur correspond à l'exploration maximale possible et elle donne un sens à la notion d'écart de position dit "petit" utilisée en introduction du modèle d'images.

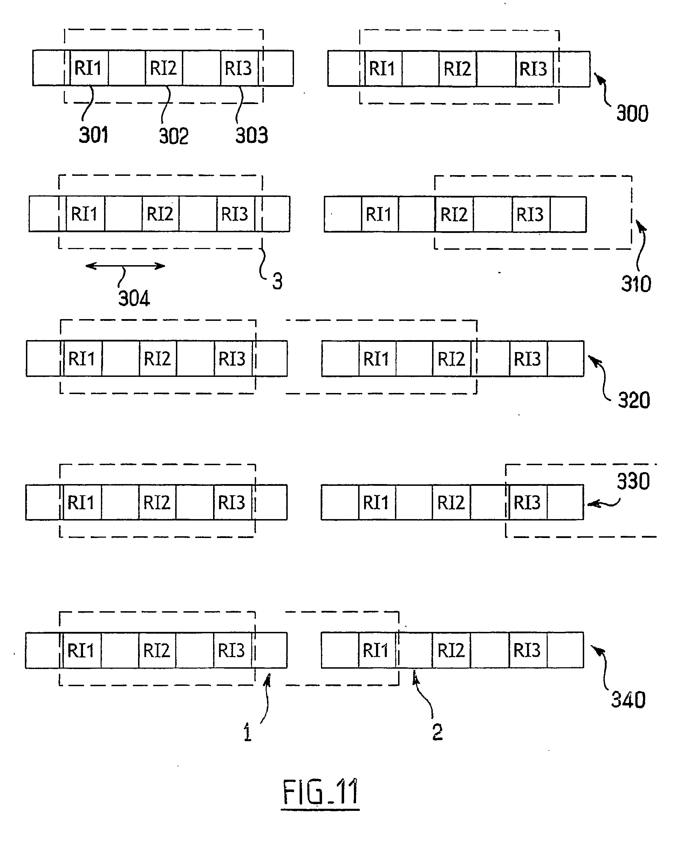

L'analyse 1D est suffisante dans le cas de réponses impulsionnelles séparables. Pour réaliser l'analyse 1D, on prend deux images 1,2 identiques présentant des réponses impulsionnelles 301, 302, 303 distantes de $\Delta l$ 304, comme illustré à la figure 11. Le fait de prendre deux images identiques pour former le couple stéréoscopique d'images induit que les homologues géométrique et radiométrique dans la deuxième image d'un point de la première image sont confondus. On fait ensuite glisser suivant la direction d'analyse, la fenêtre 3 de corrélation le long de la deuxième image 2.

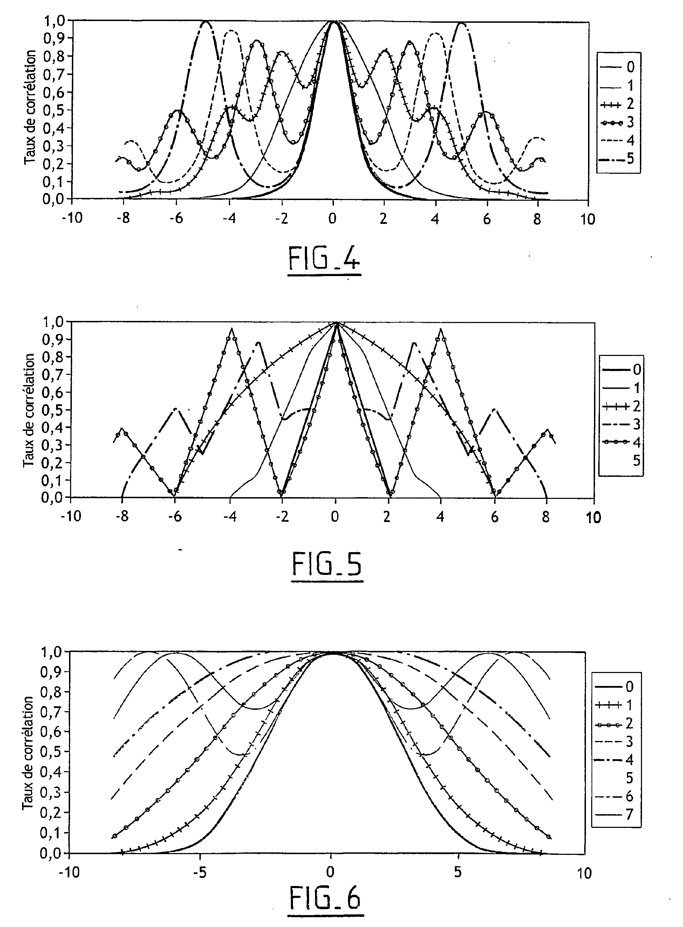

Pour chaque déplacement de 1 point de la fenêtre de corrélation 3, on calcule la corrélation. On obtient les graphiques des figures 4, 5 et 6 présentant le taux de corrélation entre les deux images identiques en fonction de la position de la fenêtre 3 de corrélation sur la deuxième image.

L'abscisse x=0 correspond au cas 300 où la fenêtre de corrélation est placée sur l'homologue géométrique du point courant de la première image, c'est-à-dire que l'on mesure le coefficient de corrélation entre un point de la première image et son homologue radiométrique vrai dans la deuxième image.

L'abscisse x=1 correspond au cas où la fenêtre de corrélation est décalée dans la deuxième image de 1 point par rapport à la position de l'homologue radiométrique vrai.

L'abscisse x=2 correspond au cas 310 où la fenêtre de corrélation est décalée dans la deuxième image de 2 points par rapport à la position de l'homologue radiométrique vrai, et ainsi de suite.

Les résultats de la corrélation sont donnés aux figures 4, 5 et 6 pour les cas SPOT 5 THR (figure 4), Hypomode standard (agglomération par paquet de 2x2 des pixels tout en conservant le même échantillonnage) (figure 5) et prolate (figure 6). Ces figures sont des graphiques. Les fonctions tracées dans ces graphiques représentent les nappes de corrélation.

Comme on peut le remarquer à la figure 4, avec une fenêtre de corrélation de type SPOT5, l'écart de position maximum entre deux réponses impulsionnelles pour conserver une nappe convexe (i.e. présentant un seul maximum) est d'un pixel. Il faudra donc avoir une zone d'exploration ne dépassant pas le pixel. En effet, pour la distance $\Delta l = 1$, on a une nappe de corrélation convexe. Par contre, pour la distance $\Delta l = 2$, on a plusieurs maximums à la nappe de corrélation.

Comme illustré à la figure 11, ces maximums correspondent au cas 300 où la fenêtre de corrélation 3 est placée sur l'homologue radiométrique vrai du point courant de la première image, et à d'autres cas où la fenêtre de corrélation est décalée par rapport à l'homologue radiométrique vrai.

On peut observer quatre maximums secondaires pour x=2, x=-2, x=4 et x=-4. Le cas 310 est obtenu pour x=2, c'est-à-dire lorsque la fenêtre de corrélation est décalée par rapport à l'homologue vrai dans la deuxième image 2. Ce décalage est de deux points suivant la direction de traitement.

Le cas 320 est obtenu pour x=-2, c'est-à-dire lorsque dans la deuxième image, le décalage de la fenêtre de corrélation par rapport à l'homologue vrai est de deux points dans la direction opposée à la direction de traitement. Les cas 320 et 330 sont obtenus pour x=4 et x=-4.

Pour ces quatre cas 310, 320, 330 et 340, on a quatre maximums à la nappe de corrélation. La nappe de corrélation nous donne donc cinq points homologues au point courant de la première image. Or un seul de ces homologues mesurés est l'homologue vrai du point courant de la première image. C'est la raison pour laquelle il est nécessaire d'assurer la convexité de la nappe de corrélation. Avec une fenêtre de type SPOT 5, l'écart de position maximum pour conserver une nappe de corrélation convexe est donc de 1 pixel.

Comme on peut le remarquer à la figure 5, l'hypomodisation standard permet une exploration de 2 pixels. Cela signifie que l'écart de position maximum que l'on peut observer entre deux points homologues est de deux pixels.

Comme on peut le remarquer à la figure 6, la fonction prolate permet une exploration de 4 pixels.

La solution prolate assure la meilleure convexité élargie de la nappe de corrélation et de fortes propriétés de continuité sur la mesure des écarts de position. La fonction prolate possède la propriété d'être la fonction positive dont les supports sont les plus concentrés simultanément en espace et en fréquence. Une méthode préférée utilisera donc une fonction prolate comme fenêtre de corrélation.

Il vient d'être démontré que certains types de fenêtres minimisent l'impact de l'erreur sur la mesure des écarts de position. Cette recherche de la précision de mesure conduit à opter préférentiellement pour une fenêtre de corrélation égale à la fonction prolate (le lecteur aura compris que l'on peut opter pour un autre type de fenêtre de corrélation tel qu'une fenêtre de corrélation de type hypomode, spot5, ou tout autre type de fenêtre de corrélation connue de l'homme de l'art). Par ailleurs, le phénomène d'adhérence est d'autant plus faible que les fenêtres sont de support spatial réduit (i.e de taille réduite). Pour minimiser le phénomène d'adhérence, on utilisera donc une fonction prolate de taille la plus petite possible compatible avec les conditions d'application du modèle de corrélation fine précédemment décrit et rappelé ci-dessous.

Détermination en chaque point d'une taille optimale de la fenêtre de corrélation

Il a précédemment été défini un seuil morphologique $SNR_C$ lié à la précision de la corrélation. De plus, l'impossibilité de résoudre l'équation fondamentale a été indiquée. Ceci conduit à rechercher des fenêtres de taille (ou dimension) la plus petit possible compatible avec ce seuil $SNR_C$.

Cette approche conduit à rechercher la prolate de support spatial le plus faible, c'est-à-dire de support spectral le plus important, remplissant la condition morphologique dans la direction de traitement. Une adaptation de la fenêtre en tout point pour remplir au mieux la relation morphologique fondamentale va maintenant être proposée :

- Soit la suite de fonctions prolate {Pn} associée à la suite de supports spectraux circulaires décroissants {$\varphi_n$}.
- Soit $\varphi_0$ égal à C le cercle inscrit dans 2R support spectral le plus grand possible sur l'image de zoom 2.

Alors, la recherche de la fenêtre optimale se résume à trouver en tout point la fenêtre de corrélation de type prolate de support spectral circulaire maximal appartenant à la suite {Pn} et vérifiant la condition morphologique. Ceci est réalisé simplement par essais successifs des fonctions prolate de supports spectraux décroissants.

Le lecteur aura compris qu'une fenêtre de support spectral maximum est une fenêtre de support spatial minimum. Par conséquent, on cherchera la fenêtre de corrélation de type prolate de taille (support spatial) la plus petite vérifiant la condition morphologique décrite précédemment.

Traitement multiéchelle

La limite d'exploration imposée par le type de fenêtre de corrélation d'une part, et par la recherche en tout point de la taille de fenêtre la plus petite d'autre part, ne permettent pas de déterminer les points homologues radiométriques d'un couple stéréoscopique lorsque l'écart de position entre ces points est important.

Ce résultat conduit à envisager un traitement en niveaux de résolution (multiéchelle), car il permet par variation de la résolution de l'image de préserver les conditions de convexité de la nappe quelle que soit l'amplitude de l'écart de position recherché. Une variation de la résolution est une variation de la définition du pixel.

Par exemple, si une image est représentée sur un écran de 21 cm en ligne et 18 cm en colonne. Et si cette image présente 210 pixels en ligne et 180 pixels en colonne, alors cette image présente un niveau de résolution de 10 pixels par centimètre. Une diminution du niveau de résolution (passage d'un niveau de résolution fin à un niveau de résolution plus grossier) va correspondre à une diminution du nombre de pixels en ligne et en colonne pour représenter l'image. Pour une diminution de 10 du niveau de résolution, on n'aura plus que 21 pixels en lignes et 18 en colonne, soit un niveau de résolution de un pixel par centimètre.

L'approche multi niveaux de résolution (multiéchelle) dyadique est nécessaire pour remplir la condition de convexité de la nappe de corrélation quelle que soit l'amplitude des écarts de position. Le couple d'images est dégradé en résolution (i.e. on diminue le niveau de résolution) par convolution par une prolate de support spectral de rayon $r_{C/s}$, où « $r_C$ » est le rayon correspondant à l'image zoomée d'un facteur 2, et « s » est le niveau de résolution courant.

La descente en niveau de résolution nécessite de boucher les trous, c'est-à-dire d'estimer la valeur des points non renseignés des cartes des écarts de position. Un point non renseigné est un point de la carte des écarts de position dont on ne connaît pas la valeur. Les trous sont bouchés itérativement par convolution avec une prolate circulaire de rayon 7 par exemple. A chaque itération les points manquants sont tour à tour renseignés. Ainsi est calculé une carte exhaustive des écarts de position entre les points de la première image et leur homologue radiométrique dans la deuxième image. L'itération à chaque niveau de résolution consiste par interpolation successive à corriger géométriquement à l'aide de cette carte suivant une direction, par exemple la direction épipolaire, la deuxième image pour la rendre de plus en plus semblable géométriquement à la première image.

En outre, il est possible - si le cas épipolaire n'est pas pur - d'explorer successivement les directions orthogonales (ligne et colonne), de calculer successivement des écarts de position monodirectionnels par corrélation, et d'effectuer les interpolations unidirectionnelles correspondantes. La connaissance des écarts de position maximaux en ligne et colonne induisent une profondeur de traitement en niveau de résolution potentiellement différents suivant les lignes et les colonnes. Le nombre de niveaux de résolution dyadiques nécessaires est :

- en ligne : $s_1 = log2(max\_1)$,
- et en colonne : $s_c = log2(max\_c)$,

où max_1 et max_c sont les écarts de position maximaux respectivement en ligne et colonne.

A chaque niveau de résolution, les opérations d'interpolation de la deuxième image, suivant les cartes des écarts de position monodirectionnels successives calculées, nécessitent l'application d'une formule de composition des cartes des écarts de position. Après chaque itération est effectuée la composition entre la carte des écarts de position entre l'image interpolée et la première image et la carte des écarts de position qui a permis de générer l'image interpolée (c'est-à-dire la carte des écarts de position de l'itération précédente). Ainsi, les erreurs d'interpolation ne se cumulent-elles pas à travers les itérations car nous sommes toujours dans le cas de la composition de deux écarts de position au maximum.

La disparité composée avec recalage barycentrique après deux itérations s'exprime de la manière suivante (sachant que la première est toujours régularisée et sans trous de corrélation) :

- Soit $\varepsilon_1$ la première carte des écarts de position entre l'image $\widetilde{I}$ et la première image *I*. Cette fonction est continue et régulière.

- Soit $\widetilde{I_1}(n) = \widetilde{I}\,(n + \varepsilon_1(n - \xi_1))$ l'image $\widetilde{I}$ corrigée des écarts de position $\varepsilon_1$ de barycentre $\xi_1$ où

$$u_1(n) \approx -\varepsilon_1(n - \xi_1) \text{ et } \widetilde{I_2}(m) = \widetilde{I_1}(m + \varepsilon_2(m - \xi_2)),$$ l'image $\widetilde{I_1}$ corrigée des écarts de position $\varepsilon_2$ de barycentre $\xi_2$ où $u_2(m) \approx -\varepsilon_2(m - \xi_2)$. $u_2(m) \approx -\varepsilon_2(m-\xi_2)$. $u_1(n)$ et $u_2(m)$ sont les mesures d'écarts de position mesurés barycentriquement, alors :

- $\widetilde{I}_2(m) = \widetilde{I}_1(m+\varepsilon_2(m-\xi_2) = \widetilde{I}(m+\varepsilon_2(m-\xi_2)+\varepsilon_1(m+\varepsilon_2(m-\xi_2)-\xi_1))$.

Critère de rejet des points mal appariés

Il a été précédemment fait mention de points non renseignés. Un point non renseigné est un point de la première image dont l'appariement avec un point de la deuxième image a été rejeté (c'est-à-dire un point dont on suppose que l'appariement est erroné). Le critère de rejet des points de fausse corrélation consiste à comparer point à point les courbures de corrélation entre la première image et la deuxième image corrigée des écarts de position (interpolée dans la grille de référence).

Un point est rejeté à chaque niveau de résolution quand l'écart entre les valeurs de courbures entres les deux images est supérieur à une valeur. Cette valeur est égale au minimum d'écart aux 4 points connexes du point courant de la première image (les points connexes du point courant sont les points voisins du point courant situés au dessus, en dessous, à droite et à gauche du point courant).

Enfin, pour chaque direction de traitement et pour le niveau de résolution de l'image, les points calculés à partir de prolate de supports contenant une prolate de supports plus petits sont éliminés car la corrélation en ces points est de précision obligatoirement plus faible.

3. Méthode de corrélation fine bidirectionnelle

Le cas de la méthode de corrélation fine unidirectionnelle a été exposé ci-dessus pour faciliter la compréhension du modèle. Le cas de la méthode de corrélation fine bidirectionnelle va maintenant être présenté.

Les images du couple stéréoscopique sont rééchantillonnées en géométrie épipolaire suivant les lignes ou les colonnes par interpolation. La recherche des tableaux de disparité 2D est effectuée alternativement suivant les lignes et les colonnes. La difficulté majeure de restitution de la table des écarts de position est généralement celle suivant la direction épipolaire.

Les écarts de position provoqués par le relief sont en général très haute fréquence alors que ceux suivant la direction orthogonale sont souvent provoqués par des vibrations du porteur et sont basse fréquence. Ceci autorise des fenêtres de traitement de plus grandes tailles suivant la direction perpendiculaire aux épipolaires. Cette différence sera naturellement gérée par le choix d'un rapport signal à bruit plus important suivant la direction orthogonale aux épipolaires que suivant la direction épipolaire.

La condition fondamentale unidirectionnelle si $\vec{v}$ est la direction épipolaire est la relation unique :

$$C_v / \overline{C_b} > SNR_c$$

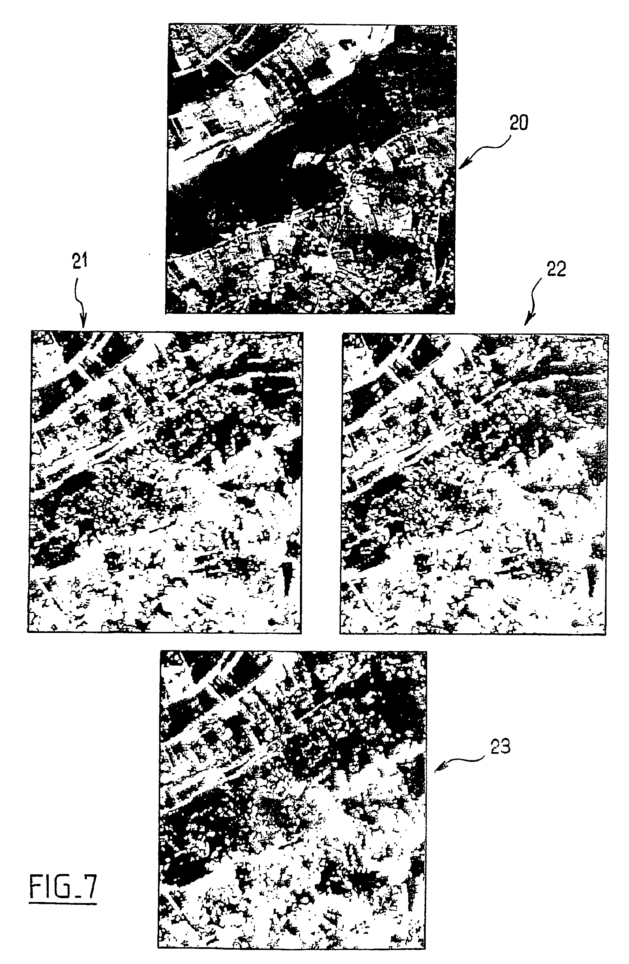

La figure 7 présente le masque 23 des points conservés après application du critère de la courbure géométrique sur l'image de type campagne 20 avec une fenêtre 9x9 de type prolate. Ce masque 23 des points conservés est obtenu en faisant l'intersection du masque 21 des points conservés après application du critère en ligne, avec le masque 22 des points conservés après application du critère en colonne.

Les zones noires de l'image correspondent aux points ayant été rejetés après application de la condition morphologique. Les points en blanc représentent les points conservés. Les images de la figure 7 sont représentées en noir et blanc pour une meilleure visualisation des points conservés.

Comme l'illustre la figure 7, le masque 21 appliqué en ligne présente 57.29% de points conservés, le masque 22 appliqué en colonne présente 53.52% de points conservés, enfin, le masque 23 intersection des deux précédents présente seulement 45.64% de points conservés. Cette illustration confirme l'avantage non négligeable de l'utilisation du repère épipolaire qui implique une condition morphologique unidirectionnelle.

4. Méthode de corrélation fine multidirectionnelle

L'image ainsi interpolée est ensuite analysée suivant sa direction orthogonale. Ce procédé est itéré.

5. Procédé d'appariement mis en place à partir du modèle de corrélation fine

Le procédé de calcul basé sur la méthode de corrélation fine précédemment décrite va maintenant être détaillé en référence à la figure 11. Le procédé de corrélation s'adapte automatiquement à l'image dès que l'on a fixé le rapport signal à bruit de courbure de corrélation SNRc.

Ce procédé de calcul est multi niveaux de résolution (multiéchelle) dyadique. Cela signifie que le traitement aura lieu pour différents niveaux de résolution. Le nombre de niveaux de résolution est connu dès que l'écart de position maximale le long de la ligne et le long de la colonne l'est.

Le procédé de calcul basé sur la méthode de corrélation fine est multidirectionnel. Les tailles de fenêtres de corrélation (prolate) sont calculées automatiquement en tout point et à tous les niveaux de résolution avec des fenêtres de corrélation qui peuvent être très différentes dans la direction épipolaire et la direction orthogonale. Elles sont fixées par le rapport signal à bruit de courbure de corrélation différent suivant la direction épipolaire et la direction orthogonale. On procédera en niveaux de résolution croissants, c'est-à-dire du plus grossier au plus fin.

A Données :

La première étape du procédé consiste à l'acquisition des données d'entrée. Pour utiliser le procédé, les données nécessaires en entrée sont les suivantes :

- le couple stéréoscopique d'images, à savoir la première image et la deuxième image. Ces deux images sont acquises à l'aide d'un système d'acquisition particulier décrit plus précisément dans la suite du document. Ce système permet l'acquisition d'un couple d'images pour un faible coefficient stéréoscopique. Ce système d'acquisition est un instrument unique comprenant 2 capteurs CCD, chaque capteur permettant l'acquisition d'une image du couple stéréoscopique.
- l'écart type du bruit et le type de fonction FTM (donnée) : à savoir « prolate », « spot5 », « hypomode »...
- les images du couples sont exprimées en direction épipolaire ligne ou colonne,
- la valeur de l'écart de position maximum suivant les épipolaires et la valeur de l'écart de position maximum suivant la direction orthogonale. Ces valeurs représentent les seuils maximums du décalage, suivant les deux directions de traitement, entre un point de la première image et son homologue dans la deuxième image. Ces valeurs vont permettre de déterminer le nombre de niveaux de résolution nécessaires pour trouver l'homologue dans la deuxième image d'un point de la première image.

B Paramètres utilisateurs

A l'étape suivante, l'utilisateur est invité à entrer un paramètre d'exhaustivité pour le procédé:

- le choix d'un rapport signal sur bruit (SNR) talon de corrélation suivant la direction épipolaire et le choix d'un SNR talon de corrélation suivant la direction orthogonale : SNR_e, SNR_o. Préférentiellement on proposera SNR_e=10 et SNR_o=100. Ces paramètres SNR_e et SNR_o vont servir de valeurs seuils dans la détermination en chaque point de la première image, d'une taille optimale pour la fenêtre de corrélation suivant chaque direction de traitement.

C Paramètres algorithmiques

Un certain nombre d'autres paramètres sont préréglés :

- le rayon maximum de la prolate circulaire de corrélation. Ce rayon est le seuil définissant la taille maximum autorisée pour la fenêtre de corrélation. Ce rayon maximum sera préférentiellement égal à 25 pour un zoom image de 2.
- le nombre d'itérations pour chaque direction de traitement, préférentiellement égal à 2.
- le nombre d'itérations, lors du comblement de parties lacunaires de la carte des écarts de position. En effet, le procédé permet de définir les écarts de position entre les points de la première image et leurs homologues respectifs dans la deuxième image. Tous les écarts de position mesurés sont placés sur une carte des écarts de position. Cependant, parmi ces écarts, ceux qui ne répondent pas à un critère de ressemblance sont rejetés. La carte des écarts de position présente donc des points pour lesquels l'écart de position entre un point de la première image et son homologue dans la deuxième image n'est pas renseigné. Ces points non renseignés de la carte des écarts de position sont appelés parties lacunaires, et le nombre d'itérations lors du comblement de ces points est préférentiellement égal à 10.

- le zoom de 2 des images du couple à tous les niveaux de résolution.

D Initialisation

A partir des données d'entrée, certains paramètres sont initialisés.

On effectue donc le calcul du nombre de niveaux de résolution suivant la direction épipolaire S_e et la direction orthogonale S_o en fonction des valeurs des écarts de position maximums (suivant les deux directions de traitement) obtenues lors de la phase A. Le nombre de niveaux de résolution dyadiques nécessaire est calculé à l'aide de la formule du logarithme à base 2 des écarts de position maximums en ligne et colonne précédemment citée :

- $s_e$=log2(valeur maximum du décalage selon la direction épipolaire),
- $s_o$=log2(valeur maximum du décalage selon la direction orthogonale),

Par ailleurs, les images d'entrée doivent être filtrées, lors du premier passage dans la boucle principale de traitement du procédé de corrélation. Ceci permet d'atténuer le bruit des images d'entrée. On effectue donc un :

- filtrage du couple stéréoscopique d'images par convolution avec une fenêtre de convolution. Cette fenêtre de convolution sera préférentiellement une prolate circulaire de rayon égal à 7. Cette opération de filtrage de la première et de la deuxième image du couple permet de régulariser les points de ces images.
- filtrage de l'image de bruit par convolution avec une fenêtre de convolution. Cette fenêtre de convolution sera préférentiellement de type prolate circulaire de rayon préférentiellement égal à 7. L'intérêt de cette opération est là encore de régulariser les points de l'image de bruit.
- interpolation dans la géométrie épipolaire du couple d'images. Les images du couple stéréoscopique sont rééchantillonnées en géométrie épipolaire suivant les lignes ou les colonnes par interpolation.

E Traitement pour chaque niveau de résolution

On effectue alors le traitement des images du couple stéréoscopique en niveaux de résolution dyadique, alternativement si besoin, suivant la direction épipolaire et orthogonale à la direction épipolaire (fonction de la profondeur de traitement en niveaux de résolution suivant la ligne et la colonne). Pour le traitement, on commence par le niveau de résolution le plus grossier et on passe progressivement au niveau de résolution le plus fin. Les étapes qui suivent seront effectuées pour chaque niveau de résolution et se divisent en deux catégories qui sont la préparation des données et la corrélation des images stéréoscopiques :

E.1 Préparation des données

L'étape de préparation des données est effectuée en réalisant les étapes suivantes :

- la convolution des images du couple par la prolate (prolate circulaire de taille préférentiellement égale à 7 pour le niveau de résolution 1, prolate séparable pour les autres). Cette convolution permet la diminution de la résolution des images de départ du couple.
- le zoom de deux de la première image, de la deuxième image et de l'image de bruit. Ce zoom de deux est réalisé par interpolation à l'aide d'une fonction de type sinus cardinale. L'opération d'interpolation consiste à, pour chaque image interpolée :

  ○ doubler le nombre de points en ligne en insérant un point de valeur inconnue entre deux points de l'image de valeurs connues.
  ○ doubler le nombre de points en colonne en insérant un point de valeur inconnue entre deux points de l'image de valeurs connues.
  ○ déplacer une fenêtre pondérée de type sinus cardinale en chaque point de valeur inconnue (le point de valeur inconnue étant situé au centre de la fenêtre) et estimer la valeur de ce point grâce aux points de valeurs connues grâce à cette fenêtre pondérée.

- la détermination de la fenêtre de corrélation optimale (i.e. de taille la plus petite). Pour cela, on effectue le calcul en tout point de la première image du rapport signal sur bruit de courbure de corrélation SNRc en fonction de la fenêtre de corrélation (prolate circulaire). Puis on choisit la plus petite fenêtre de corrélation, suivant la direction épipolaire et perpendiculaire, vérifiant la condition $C_v / C_b > SNR_c$. Cette détermination est effectuée en réalisant, en chaque point de l'image, les étapes suivantes:

  ○ calcul de la courbure de corrélation du bruit $C_b$ sur l'image de bruit pour chaque taille de fenêtre de corrélation de type prolate. Ce calcul est réalisé en utilisant la formule de la courbure de corrélation citée lors de la présentation du modèle de corrélation fine unidirectionnelle,
  ○ calcul de la courbure de corrélation de la première image pour chaque taille de fenêtre de corrélation de type prolate,
  ○ calcul pour chaque fenêtre de corrélation de type prolate du rapport signal sur bruit de courbure de corrélation (SNRc) rapport des courbures précédentes,
  ○ choix (et stockage en mémoire) de la plus petite taille de fenêtre de corrélation de type prolate tel que $|C_v / C_b| > SNR_{\_e}$ et $|C_v / C_b| > SNR_{\_o}$ (par exemple, si une fenêtre de corrélation de taille 16x16 et une fenêtre de corrélation de taille 8x8 vérifient $|C_v / C_b | > SNR_{\_e}$ et $|C_v / C_b |> SNR_{\_o}$, on choisira la fenêtre de corrélation de taille 8x8).

E.2 Corrélation des images stéréoscopiques

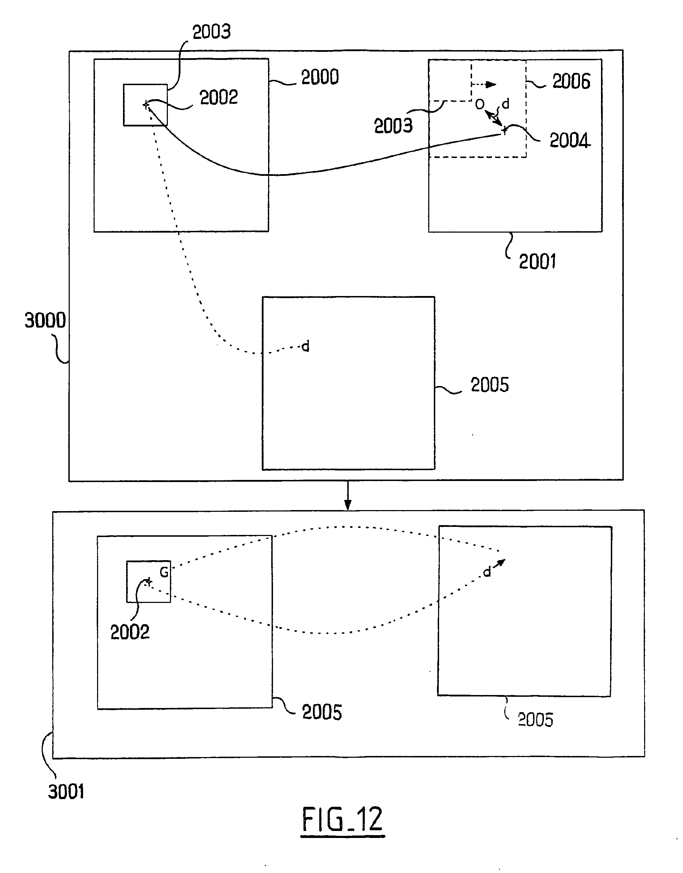

Une fois les données préparées, on effectue l'étape de traitement des données. Cette étape comprend les sous étapes qui suivent, dont certaines sont illustrées à la figure 12. Ces sous étapes sont réitérées pour chaque point de l'image et suivant chaque direction de traitement :

Pour chaque point de la première image, et pour chaque direction de traitement, on effectue :

- l'interpolation de la deuxième image avec la carte des écarts de position cumulés trouvée à l'itération précédente, c'est-à-dire pour le niveau de résolution précédent. Cette interpolation de l'image 2 est faite à l'aide de la carte des écarts de position.
- le calcul (3000) de l'écart de position d entre le point courant 2002 de la première image 2000 et son homologue radiométrique 2004 supposé dans la deuxième image 2001. Ce calcul est effectué par corrélation dans la fenêtre de corrélation 2003 pondérée. Pour cela, on centre la fenêtre de corrélation 2003 sur le point courant 2002 de la première image 2000, et on déplace la fenêtre de corrélation 2003 dans l'aire de recherche 2006 de la deuxième image 2001. L'aire de recherche 2006 est centrée sur l'homologue géométrique O (dans la deuxième image) du point courant 2002 de la première image 2000. On retient l'écart de position pour lequel la valeur de corrélation est maximale.

Ce calcul est réalisé pour tous les points de la première image 2000 et permet l'obtention d'une carte des écarts de position intermédiaire 2005 (c'est-à-dire une carte où la technique de recalage barycentrique notamment n'a pas été réalisée). On effectue ensuite :

- le recalage barycentrique (3001) à chaque niveau de résolution au point prés de la carte des écarts de position intermédiaire 2005. Ceci permet de limiter l'impact du phénomène d'adhérence de la corrélation précédemment présenté.

L'étape de recalage barycentrique, en un point, comprend les sous étapes consistant à :

○ déterminer le barycentre G des points de la première image 2000 contenus dans la fenêtre de corrélation 2003 ayant servi pour la détermination de l'écart de position entre le point courant 2002 de la première image 2000 et son homologue 2004 dans la deuxième image 2001,
○ assigner à ce barycentre G la valeur de l'écart de position d du point courant dans la carte des écarts de position 2005.

Ainsi, lors de l'étape de recalage barycentrique, la valeur de l'écart de position calculée pour le point courant est décalée, dans la carte des écarts de position, à la position du barycentre des points de la première image contenus dans la fenêtre de corrélation (utilisée pour le calcul de l'écart de position entre le point courant et son homologue radiométrique supposé).
Une fois le recalage barycentrique effectué

- Pour une même résolution :
- le rejet des points issus de fenêtres de taille plus importante et contenant des fenêtres de taille plus petite. En effet, la corrélation en ce point à l'aide de la fenêtre de corrélation de plus grande taille est de précision obligatoirement plus faible.
- le rejet des points homologues de rayons de courbure trop différents après l'interpolation de la position de la deuxième image. Pour cela, on va effectuer pour chaque résolution et direction :

  ○ le calcul de la courbure de corrélation du point courant (point étudié) de la première image,
  ○ le calcul de la courbure de corrélation de l'homologue dans la deuxième image du point courant de la première image,
  ○ le calcul de la différence entre les deux courbures précédemment calculées (écart entre les courbures de corrélation du point courant et de son homologue dans la deuxième image),
  ○ le calcul de l'écart de courbure minimum entre les courbures de corrélation des quatre voisins (dans la première image) au point courant et la courbure de corrélation du point courant.
  ○ le rejet du point homologue si l'écart de courbure entre le point courant et son homologue est plus important que l'écart inférieur calculé sur les quatre voisins du point courant de la première image.

- le rebouchage itératif (préférentiellement 10 itérations) des cartes des écarts de position lacunaires en passant par les points existants. En effet, on a vu que les points homologues d'écarts de courbure trop différents étaient rejetés. Par conséquent certains points de la carte des écarts de position vont être non renseignés. On effectue donc un rebouchage itératif de la carte des écarts de position. De plus le recalage barycentrique produit des trous (points de la carte où l'écart de position n'est pas renseigné), puisque l'écart de position d'un point peut être assigné (ou translaté) à un autre point lors du recalage barycentrique.

Pour cela, on effectue :

  ○ la convolution par une fenêtre de convolution de type prolate,
  ○ le rebouchage des points non renseignés de la carte des écarts de position par convolution par une prolate.

- le lissage de la carte des écarts de position par une prolate séparable correspondant au niveau de résolution courant (circulaire au niveau de résolution de l'image). Ce lissage permet de débruiter la carte des écarts de position.
- à la composition de la table des écarts de position courante avec celle calculée à la précédente itération (cumul). Cette composition permet de mettre à jour la table des écarts de position calculée pour le niveau de résolution précédent.

On effectue le traitement pour tous les niveaux de résolution en éliminant les points calculés avec une fenêtre de corrélation prolate contenant une fenêtre de corrélation prolate plus petite et ceci suivant les deux directions de traitement. On obtient alors en sortie du procédé la carte des écarts de position pour le niveau de résolution le plus fin.

F Sorties

On obtient à la dernière étapes du procédé les données de sortie du procédé. Il s'agit de tableaux de tailles égales à la taille de la première et de la deuxième image. Ces tableaux sont :

- la carte des écarts de position (2 tableaux),
- la carte des tailles de prolates (2 tableaux) en tout point renseigné (non rejeté) de la première image au niveau de résolution le plus fin (le niveau de résolution le plus fin étant le niveau de résolution des images d'entrée).

Le procédé présenté ci-dessus est mis en oeuvre dans un ensemble d'acquisition et d'appariement d'un couple stéréoscopique d'images. Cet ensemble d'acquisition et d'appariement comprend un système d'acquisition et un système de traitement. Cet ensemble d'acquisition et de traitement permet l'acquisition et le traitement d'un couple stéréoscopique d'images à faible coefficient stéréoscopique. L'ensemble d'acquisition et de traitement présente l'avantage de limiter les parties cachées, c'est-à-dire des parties n'apparaissant que dans l'une des deux images, et par exemple de voir le fond des rues en ville.

Le système d'acquisition peut être intégré ou distant du système de traitement. Lorsque les systèmes d'acquisition et de traitement sont distants, ils communiquent par des moyens de communication avec ou sans fil.

Le système d'acquisition permet l'acquisition des données d'entrées du procédé (étape A du procédé). Ce système d'acquisition est par exemple un satellite et comprend des moyens de communication (pour la communication avec le système de traitement), des moyens de traitement (de type processeur), des moyens mémoire (pour stocker les images acquises) et un capteur optoélectronique (système optique + capteurs CCD).

Le système de traitement est programmé pour mettre en oeuvre les étapes du procédé d'appariement décrit précédemment Ce système de traitement permet quant à lui de réaliser l'appariement du couple stéréoscopique d'images. Le système de traitement est par exemple une station de travail comprenant des moyens mémoires (RAM, ROM) connectés à des moyens de traitement tel qu'un processeur, des moyens de visualisation tels qu'un écran d'affichage et des moyens de saisie tels qu'un clavier et une souris. Le système de traitement est connecté avec des moyens de communication afin de recevoir les images à apparier acquises par le système d'acquisition.

Une comparaison de la méthode de corrélation fine avec des méthodes ne faisant pas intervenir le zoom de 2 du couple stéréoscopique d'images, la modélisation de la corrélation avec le recalage barycentrique, et le calcul multi niveaux de résolution (ou multiéchelle) du maximum de la nappe de corrélation est proposée, à partir de simulations représentées à la figure 7.

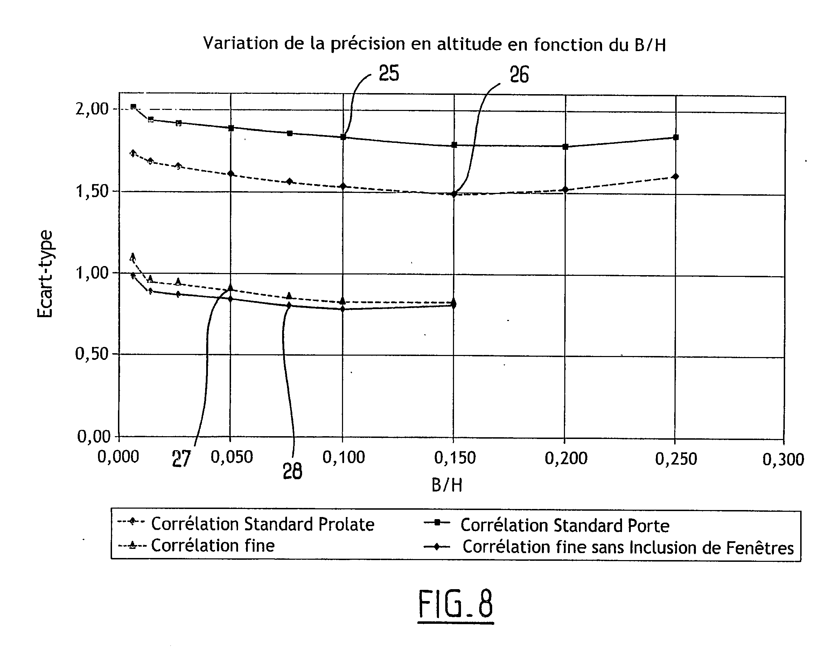

Les résultats obtenus pour quatre méthodes d'appariement d'images stéréoscopiques sont présentés (fig. 8 précision en fonction du b/h), ces méthodes étant : la méthode de corrélation standard par une fenêtre de corrélation de type prolate 26, la méthode de corrélation standard par une fenêtre de corrélation de type constante 25, la méthode de corrélation fine par une fenêtre de corrélation de type prolate 27, et la méthode de corrélation fine par une fenêtre de corrélation de type prolate en enlevant les points issus de fenêtres incluant des fenêtres plus petites 28.

Les images du couple sont des images de Marseille de pas d'échantillonnage un mètre avec une fonction de transfert respectant quasiment le principe de Shannon (valeur proche de 0 à la fréquence de coupure). Le rapport signal à bruit des images est égal à 100.

L'acquisition des images du couple stéréoscopique est matricielle. Ces images sont calculées à partir d'une orthophotographie échantillonnée à un mètre et d'un modèle numérique de terrain de précision submétrique couvrant la même zone.

Des couples d'images stéréoscopiques sont générés pour plusieurs b/h. Ce coefficient prend des valeurs entre 0.005 et 0.25. Ce coefficient est provoqué par le seul dépointage en tangage.

Comme représenté à la figure 8, la précision avec la méthode de corrélation fine est deux fois meilleure que celle mesurée avec les méthodes classiques. De plus, on peut considérer que la corrélation fine est de précision constante pour des b/h entre 0.01 et 0.15. La précision altimétrique dont l'écart type est ici présenté en ordonnée avec comme unité le pixel est meilleure que le pixel. Cette méthode conserve une précision subpixellaire avec de faibles coefficients stéréoscopiques (b/h).

Par ailleurs, la méthode préconisée dite de corrélation fine sans inclusion de fenêtres permet de rejeter les points d'ombres qui sont souvent aberrants. Le taux de corrélation est proche de 1 si l'on néglige le phénomène d'ombre.

Le procédé d'appariement d'images stéréoscopiques décrit ci-dessus permet donc le traitement d'images stéréoscopiques pour un faible coefficient stéréoscopique (b/h faible) avec la même précision altimétrique que pour des coefficients stéréoscopiques forts. Ce procédé fonctionne jusqu'à des coefficients stéréoscopiques très faibles (0.01) sans dégrader la précision altimétrique.

Ce procédé de corrélation fine est mis en oeuvre dans le système de traitement de l'ensemble d'acquisition et d'appariement d'un couple stéréoscopique d'images.

Ce procédé permet une nouvelle conception des systèmes spatiaux d'acquisition et de photographie aptes à acquérir le couple stéréoscopique d'images. Un coefficient stéréoscopique (b/h) proche de 0.02 limite les directions de visées homologues des capteurs CCD à une valeur inférieure à $\pm$ un degré.

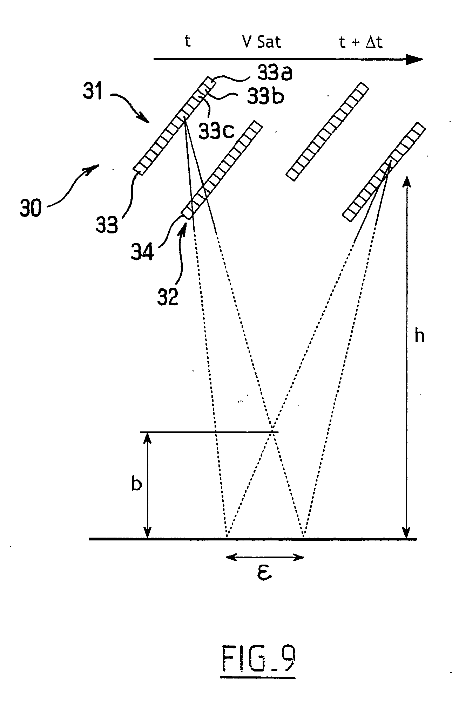

Un nouveau type de système spatial d'acquisition permettant l'acquisition du couple stéréoscopique d'images est représenté à la figure 9.

Contrairement aux systèmes d'acquisition de l'art antérieur, le système d'acquisition selon la présente invention comporte un instrument d'acquisition unique (non représenté) comprenant un système optique unique (non représenté) et deux capteurs CCD 31, 32 symétriques dans le plan focal optique.

Chaque capteur CCD représenté à la figure 9 est une barrette constituée de détecteurs 33a, 33b, 33c. Ces détecteurs 33a, 33b, 33c sont par exemple des photodiodes électroniques sensibles CCD à la lumière et capable de convertir le signal lumineux en un courant électrique proportionnel à l'intensité de cette lumière. Ces détecteurs 33a, 33b, 33c sont placés côte à côte, en ligne et forment la barrette 33. Chaque détecteur 33a, 33b, 33c est chargé de l'observation d'un pixel. Chaque détecteur 33a, 33b, 33c capte la lumière provenant d'un pixel de terrain.

Le principe de fonctionnement d'un tel système d'acquisition d'image stéréoscopique dans le cas spatial est le suivant.

Chaque barrette 33, 34 permet l'acquisition d'une ligne d'image. La barrette 33 permet l'acquisition d'une ligne de la première image, et la barrette 34 l'acquisition d'une ligne de la deuxième image.

La première image et la deuxième image du couple stéréoscopique sont donc acquises ligne par ligne par les barrettes CCD 33, 34 au fur et à mesure de l'avancement du satellite sur son orbite (entre le temps t et t+Δt).

Les lignes d'images acquises par les premières et deuxièmes barrettes 33, 34 sont stockées dans des moyens mémoire.

Une fois les deux images 1, 2 acquises, le système d'acquisition envoie (par des moyens de communication sans fil) le couple stéréoscopique d'images 1, 2 au système de traitement. Ce système de traitement est préférentiellement basé au sol et permet l'appariement des points du couple.

Dans le cas d'un système d'acquisition spatiale les deux barrettes introduites dans le plan focal peuvent être remplacées par deux matrices (chaque matrice étant constituée d'un ensemble de détecteurs CCD répartis en lignes et colonnes) également situées dans le plan focal.

Ceci peut être réalisé également avec un appareil photographique non spatial. Dans le cas d'un appareil photographique, le système d'acquisition du couple stéréoscopique d'images comportera un capteur optoélectronique comprenant un système optique unique et deux capteurs CCD symétriques dans le plan focal.

Le procédé d'appariement fin d'un couple stéréoscopique d'images mis en oeuvre dans le système de traitement reste valable pour les systèmes d'acquisition comprenant un instrument spatial unique constitué de deux matrices ou de deux barrettes dès lors que les perturbations d'attitudes sont corrigées ou négligeables.

**Revendications**

1. Système de traitement pour un ensemble d'acquisition et d'appariement d'un couple stéréoscopique d'images (1, 2) comprenant un système d'acquisition d'un couple stéréoscopique d'images à coefficient stéréoscopique inférieur à 0,1 et le système de traitement du couple stéréoscopique acquis,
   **caractérisé en ce que** le système de traitement comporte :

   - des moyens aptes à traiter les deux images (1, 2) du couple stéréoscopique, selon au moins une direction de traitement et selon différents niveaux de résolution du plus grossier au plus fin, lesdits moyens de traitement comprenant des moyens qui, pour chaque changement de niveau de résolution, sont aptes à :

     - déterminer, en chaque point de la première image (1), une fenêtre de corrélation (3) optimale,
     - calculer, par corrélation avec les fenêtres de corrélation déterminées, les écarts de position entre chaque point (40) de la première image (1) et son homologue radiométrique (41) dans la deuxième image (2),
     - obtenir, pour le niveau de résolution courant, une carte des écarts de position entre chaque point (40) de la première image et son homologue radiométrique (41) dans la deuxième image,

     - effectuer un recalage barycentrique des points de ladite carte obtenue en effectuant, pour chaque point de ladite carte:

       • la détermination du barycentre 6 des points de la première image contenus dans la fenêtre de corrélation optimale associée au point considéré de ladile carte
       • l'assignation à ce barycentre, de la valeur de l'écart de position du point considéré de ladite carte,
       et

     - les moyens aptes à obtenir pour le niveau de résolution courant, un carte des écarts de position permettant l'obtention, pour le niveau de résolution le plus fin, de la carte des écarts de position entre chaque point de la première image (1) et son homologue radiométrique dans la deuxième image (2).

2. Système de traitement selon la revendication 1, **caractérisé en ce que** les moyens aptes à traiter les deux images du couple comprennent en outre :

   - des moyens aptes à effectuer une convolution des images (1, 2) du couple par une fenêtre de convolution,
   - des moyens aptes à effectuer un zoom de taille 2 des images (1, 2) du couple stéréoscopique.

3. Système de traitement selon la revendication 1 ou la revendication 2, **caractérisé en ce que** les moyens aptes à déterminer la fenêtre de corrélation optimale en chaque point de la première image comprennent :

   - des moyens aptes à calculer une courbure de la première image pour chaque taille de fenêtre de corrélation (3),
   - des moyens aptes à calculer une courbure de l'image de bruit pour chaque taille de fenêtre de corrélation (3),
   - des moyens aptes à calculer, pour chaque taille de fenêtre de corrélation, le rapport (SNRc) des courbures précédentes,

et des moyens aptes à choisir la plus petite taille de fenêtre de corrélation telle que ledit rapport soit supérieur à un paramètre d'exhaustivité saisi par l'utilisateur.

**4.** Système de traitement selon l'une quelconque des revendications précédentes, **caractérisé en ce que** les moyens aptes à traiter les deux images comprennent en outre des moyens aptes à effectuer une interpolation de la deuxième image (2) grâce à une carte des écarts de position obtenue pour un niveau de résolution précédent.

**5.** Système de traitement selon la revendication 4; **caractérisé en ce que** les moyens aptes à traiter les deux images comprennent en outre :

- des moyens aptes à rejeter les points homologues (40, 41) issus de fenêtres de corrélation (3) de plus grandes tailles et contenant des fenêtres de corrélation (3) de plus petites tailles,
- des moyens aptes à rejeter les points homologues (40, 41) de rayons de courbure vérifiant une condition de rejet après interpolation de la deuxième image (2),
- des moyens aptes à compléter itérativement, dans la carte des écarts de position correspondant au niveau de résolution courant, des points d'écarts de position lacunaires en fonction des points d'écarts de position existants,
- des moyens aptes à lisser la carte des écarts de position correspondant au niveau de résolution courant par une fenêtre de convolution,
- des moyens aptes à composer la carte des écarts de position calculée pour le niveau de résolution courant avec la carte des écarts de position calculée pour le précédent niveau de résolution afin de mettre à jour ladite carte des écarts de position calculée pour le niveau de résolution précédent.

**6.** Système de traitement selon l'une des revendications précédentes, **caractérisé en ce qu'**il comporte en outre des moyens aptes à rejeter les points homologues vérifiant une condition de rejet, lesdits moyens aptes à rejeter les points homologues comprenant:

- des moyens qui, pour le point courant, sont aptes à calculer sur la première image (1) les courbures de ses deux points voisins suivant chaque direction de traitement,
- des moyens qui, pour le point courant, sont aptes à calculer l'écart inférieur des courbures des 4 connexes au point courant de la première image (1),
- des moyens qui, pour le point courant, sont aptes à calculer, dans la deuxième image (2), son point homologue interpolé par la carte des écarts de position,
- des moyens qui, pour le point courant, sont aptes à calculer l'écart entre sa courbure et celle du point homologue,
- des moyens qui, pour le point courant, sont aptes à rejeter le point homologue si cet écart est plus important que l'écart inférieur calculé sur la première image (1).

**7.** Procédé d'appariement d'un couple stéréoscopique d'images à coefficient stéréoscopique inférieur à 0,1, **caractérisé en ce qu'**il comprend les étapes :

- de traitement grâce à des moyens de traitement des deux images (1, 2) du couple stéréoscopique, selon au moins une direction de traitement et selon différents niveaux de résolution du plus grossier au plus fin, en, pour chaque changement de niveau de résolution :

    - déterminant, en chaque point de la première image (1), une fenêtre de corrélation (3) optimale,
    - calculant, par corrélation avec les fenêtres de corrélation déterminées, les écarts de position entre chaque point (40) de la première image (1) et son homologue radiométrique (41) dans la deuxième image (2),
    - obtenant, pour le niveau de résolution courant, une carte des écarts de position entre chaque point (40) de la première image et son homologue radiométrique (41) dans la deuxième image,
    - effectuant un recalage barycentrique des points de ladite carte obtenue en effectuant, pour chaque point de ladite carte:

        • la détermination du barycentre 6 des points de la première image contenus dans la fenêtre de corrélation optimale associée au point considéré de ladite carte
        • l'assignation à ce barycentre, de la valeur de l'écart de position du point considéré de ladite carte,

- d'obtention, pour le niveau de résolution le plus fin, de la carte des écarts de position entre chaque point de la première image (1) et son homologue radiométrique dans la deuxième image (2).

**8.** Procédé selon la revendication 7, **caractérisé en ce qu'**il comporte en outre l'étape :

- d'acquisition d'un couple stéréoscopique d'images (1, 2) par un instrument d'acquisition unique (30) destiné à fonctionner avec des coefficients stéréoscopiques de quelques centièmes et comprenant deux capteurs CCD (31, 32) dans le plan focal optique (19'), chaque capteur (31) permettant l'acquisition d'une image (1) du couple.

**9.** Procédé selon la revendication 7 ou la revendication 8, **caractérisé en ce qu'**il comporte une étape consistant à traiter grâce à des moyens de traitement les deux images (1, 2) du couple stéréoscopique selon une direction épipolaire.

**10.** Procédé selon l'une quelconque des revendications 7 à 9, **caractérisé en ce qu'**il comporte une étape consistant à traiter grâce à des moyens de traitement les deux images (1, 2) du couple stéréoscopique selon une direction épipolaire et une direction orthogonale à la direction épipolaire.

**11.** Procédé selon l'une quelconque des revendications 7 à 10, **caractérisé en ce qu'**il comprend en outre une étape de saisie par un utilisateur d'au moins un paramètre d'exhaustivité correspondant au choix d'un rapport signal sur bruit de corrélation suivant chaque direction de traitement.

**12.** Procédé selon l'une des revendications 7 à 11, **caractérisé en ce qu'**il comporte en outre les étapes d'acquisition :

- d'une image de bruit,
- du type de la fenêtre de corrélation,
- d'une direction épipolaire pour chaque image (1, 2) du couple pour un coefficient stéréoscopique moyen,
- d'au moins une valeur de l'écart de position maximum suivant chaque direction de traitement.

**13.** Procédé selon la revendication 12, **caractérisé en ce que** le procédé comprend en outre une étape de prétraitement des données consistant à :

- calculer un nombre de niveaux de résolution suivant chaque direction de traitement en fonction de chaque valeur de l'écart de position maximum,
- filtrer les images (1, 2) du couple stéréoscopique d'images par convolution avec une fenêtre de convolution,
- filtrer l'image de bruit par convolution avec ladite fenêtre de convolution,
- interpoler dans une géométrie épipolaire le couple stéréoscopique d'images.

**14.** Procédé selon l'une des revendications 7 à 13, **caractérisé en ce que** l'étape de traitement des images comprend en outre les étapes consistant à :

- effectuer une convolution des images (1, 2) du couple par une fenêtre de convolution,
- effectuer un zoom de taille 2 des images (1, 2) du couple stéréoscopique.

**15.** Procédé selon la revendication 11, **caractérisé en ce que** l'étape de détermination de la fenêtre de corrélation optimale consiste à, pour chaque point de la première image :

- calculer une courbure de la première image pour chaque taille de fenêtre de corrélation (3),
- calculer une courbure de l'image de bruit pour chaque taille de fenêtre de corrélation (3),
- calculer, pour chaque taille de fenêtre de corrélation, le rapport (SNRc) des courbures précédentes,

et à choisir la plus petite taille de fenêtre de corrélation telle que ledit rapport soit supérieur à chaque paramètre d'exhaustivité saisi par l'utilisateur.

**16.** Procédé selon l'une des revendications 7 à 15, **caractérisé en ce que** l'étape de traitement des images comprend en outre une étape consistant à effectuer une interpolation de la deuxième image (2) grâce à une carte des écarts de position obtenue pour un niveau de résolution précédent.

**17.** Procédé selon la revendication 16, **caractérisé en ce que** l'étape de traitement des images comprend en outre les étapes consistant à :

- rejeter les points homologues issus de fenêtres de corrélation de plus grandes tailles et contenant des fenêtres de corrélation de plus petites tailles,

- rejeter les points homologues (40, 41) de rayons de courbure vérifiant une condition de rejet après interpolation de la deuxième image (2),

- compléter itérativement, dans la carte des écarts de position correspondant au niveau de résolution courant, des points d'écarts de position lacunaires en fonction des points d'écarts de position existants,

- lisser la carte des écarts de position correspondant an niveau de résolution courant par une fenêtre de convolution,

- composer la carte des écarts de position calculée pour le niveau de résolution courant avec la carte des écarts de position calculée pour le précédent niveau de résolution afin de mettre à jour ladite carte des écarts de position calculée pour le niveau de résolution précédent.

**18.** Procédé selon l'une des revendications 17, **caractérisé en ce que** l'étape de rejet des points homologues vérifiant une condition de rejet consiste à, pour le point courant :

- calculer sur la première image (1) les courbures de ses deux points voisins suivant chaque direction de traitement,
- calculer l'écart inférieur des courbures des 4 connexes an point courant de la première image,
- calculer, dans la deuxième image, son point homologue interpolé par la carte des écarts de position,
- calculer l'écart entre sa courbure et celle du point homologue,
- rejeter le point homologue si cet écart est plus important que l'écart inférieur calculé sur la première image.

**19.** Procédé selon l'une des revendications 7 à 18, **caractérisé en ce que** l'étape d'obtention, pour le niveau de résolution le plus fin, de la carte des écarts de position, comprend l'obtention :

- d'au moins un tableau représentant la carte des écarts de position suivant chaque direction de traitement,
- d'au moins un tableau représentant une carte des tailles des fenêtres de corrélation employées en tout point non rejeté de la première image, suivant chaque direction de traitement.

**20.** Procédé selon l'une des revendications 7 à 19, **caractérisé en ce que** les fenêtres de convolution et de corrélation utilisées sont des fenêtres de convolution et de corrélation de type prolate.

**21.** Ensemble d'acquisition et d'appariement d'un couple stéréoscopique d'image (1, 2) comprenant un système de traitement d'un couple stéréoscopique d'images selon l'une des revendications 1 à 6, **caractérisé en ce qu'**il comprend en outre un système d'acquisition stéréoscopique comportant un instrument d'acquisition unique (30) comprenant deux capteurs CCD (31, 32) dans le plan focal optique, chaque capteur CCD (31, 32) permettant l'acquisition d'une image (1, 2), le système d'acquisition étant destiné à fonctionner avec des coefficients stéréoscopiques inférieur a 0.1.

**Claims**

**1.** Processing system for a unit for the acquisition and matching of a stereopair of images (1, 2) which comprises an acquisition system for acquiring a stereopair of images with a stereoscopic coefficient of less than 0.1 and the processing system for processing the stereopair acquired, **characterized in that** the processing system comprises:

- means capable of processing the two images (1, 2) of the stereopair in at least one processing direction and at various levels of resolutions, from the coarsest to the finest, said processing means comprising means which, for each change of level of resolution, are capable of:
- determining, at each point in the first image (1), an optimum correlation window (3),
- computing, by correlation with the determined correlation windows, the position differences between each point (40) in the first image (1) and its radiometrically homologous point (41) in the second image (2),
- obtaining, for the current level of resolution, a map of the disparities between each point (40) in the first image and its radiometrically homologous point (41) in the second image, and
- carrying out a barycentric correction operation on the points on said map obtained, by carrying out, for each point on said map:

• the determination of the barycentre G of the points in the first image that are contained in the optimum correlation window associated with the point in question on said map and

• the assigning of the position difference of the point in question on said map to this barycentre; and

- means capable of obtaining, for the current level of resolution, a disparity map for obtaining, for the finest level of resolution, the map of the disparities between each point in the first image (1) and its radiometrically homologous point in the second image (2).

2. Processing system according to Claim 1, **characterized in that** the means capable of processing the two images of the stereopair further include:

- means capable of convoluting the images (1, 2) of the stereopair via a convolution window; and
- means capable of performing a size-2 zoom on the images (1, 2) of the stereopair.

3. Processing system according to Claim 1 or Claim 2, **characterized in that** the means capable of determining the optimum correlation window at each point in the first image comprise:

- means capable of computing a curvature of the first image for each correlation window size (3),
- means capable of computing a curvature of the noise image for each correlation window size (3), and
- means capable of computing, for each correlation window size, the ratio (SNRc) of the above curvatures; and means capable of choosing the smallest correlation window size such that said ratio is greater than an exhaustiveness parameter input by the user.

4. Processing system according to any one of the preceding claims, **characterized in that** the means capable of processing the two images further include means capable of performing an interpolation on the second image (2) using a disparity map obtained for the preceding level of resolution.

5. Processing system according to Claim 4, **characterized in that** the means capable of processing the two images further include:

- means capable of rejecting the homologous points (40, 41) resulting from larger correlation windows (3) and containing smaller correlation windows (3);
- means capable of rejecting the homologous points (40, 41) of radii of curvature that meet a rejection condition after extrapolation of the second image (2);
- means capable of iteratively adding, in the disparity map corresponding to the current level of resolution, missing position difference points as a function of the existing position difference points;
- means capable of smoothing the disparity map corresponding to the current level of resolution via a convolution window; and
- means capable of constructing the disparity map computed for the current level of resolution from the disparity map computed for the preceding level of resolution so as to update said disparity map computed for the preceding level of resolution.

6. Processing system according to one of the preceding claims, **characterized in that** it further includes means capable of rejecting the homologous points that meet a rejection condition, said means capable of rejecting the homologous points comprising:

- means which, for the current point, are capable of computing, in the first image (1), the curvatures of its two neighboring points along each processing direction;
- means which, for the current point, are capable of computing the smaller difference of the curvatures of the four points associated with the current point in the first image (1);
- means which, for the current point, are capable of computing, in the second image (2), its homologous point interpolated via the disparity map;
- means which, for the current point, are capable of computing the difference between its curvature and that of the homologous point; and
- means which, for the current point, are capable of rejecting the homologous point if this difference is greater than the computed smaller difference on the first image (1).

7. Procedure for matching a stereopair of images with a stereoscopic coefficient of less than 0.1, **characterized in that** it comprises the following steps:

- processing by means for processing the two images (1, 2) of the stereopair, along at least one processing direction and at various levels of resolutions from the coarsest to the finest, by, for each change of level of resolution:

- determining, at each point in the first image (1), an optimum correlation window (3),
- computing, by correlation with the determined correlation windows, the position differences between each point (40) in the first image (1) and its radiometrically homologous point (41) in the second image (2),
- obtaining, for the current level of resolution, a map of the disparities between each point (40) in the first image and its radiometrically homologous point (41) in the second image, and
- performing a barycentric correction operation on the points of said map obtained, by carrying out, for each point on said map:

• the determination of the barycentre G of the points in the first image that are contained in the optimum correlation window associated with the point in question on said map and
• the assigning of the position difference of the point in question on said map to this barycentre; and

- generation, for the finest level of resolution, of the map of the disparities between each point in the first image (1) and its radiometrically homologous point in the second image (2).

8. Procedure according to Claim 7, **characterized in that** it further includes the step of:

- acquisition of a stereopair of images (1, 2) by a single acquisition instrument (30) designed to operate with stereoscopic coefficients of a few hundredths and comprising two CCD sensors (31, 32) in the optical focal plane (19'), each sensor (31) allowing the acquisition of one image (1) of the stereopair.

9. Procedure according to Claim 7 or Claim 8, **characterized in that** it includes a step consisting in processing, by processing means, the two images (1, 2) of the stereopair along an epipolar direction.

10. Procedure according to any one of Claims 7 to 9, **characterized in that** it includes a step consisting in processing, by processing means, the two images (1, 2) of the stereopair along an epipolar direction and a direction orthogonal to the epipolar direction.

11. Procedure according to any one of Claims 7 to 10, **characterized in that** it further includes a step in which a user inputs at least one exhaustiveness parameter corresponding to the choice of a correlation signal-to-noise ratio along each processing direction.

12. Procedure according to one of Claims 7 to 11; **characterized in that** it further includes the steps for acquisition of:

- a noise image;
- the type of correlation window;
- an epipolar direction for each image (1, 2) of the stereopair for a mean stereoscopic coefficient; and
- at least one value of the maximum position difference along each processing direction.

13. Procedure according to Claim 12, **characterized in that** the method further includes a data preprocessing step consisting in:

- computing a number of levels of resolution along each processing direction as a function of each value of the maximum position difference;
- filtering the images (1, 2) of the stereopair of images by convolution via a convolution window;
- filtering the noise image by convolution via said convolution window; and
- interpolating the stereopair of images in an epipolar geometry.

14. Procedure according to one of Claims 7 to 13, **characterized in that** the image processing step further includes the steps consisting in:

- performing a convolution on the images (1, 2) of the stereopair via a convolution window; and
- performing a size-2 zoom on the images (1, 2) of the stereopair.

**15.** Procedure according to Claim 11, **characterized in that** the step of determining the optimum correlation window consists, for each point in the first image, in:

- computing a curvature of the first image for each size of the correlation window (3);
- computing a curvature of the noise image for each size of the correlation window (3); and
- computing, for each size of the correlation window, the (SNRc) ratio of the preceding curvatures; and in choosing the smallest correlation window size such that said ratio is greater than each exhaustiveness parameter input by the user.

**16.** Procedure according to one of Claims 7 to 15, **characterized in that** the image processing step further includes a step consisting in performing an interpolation on the second image (2) using a disparity map obtained for a preceding level of resolution.

**17.** Procedure according to Claim 16, **characterized in that** the image processing step further includes the steps consisting in:

- rejecting the homologous points resulting from larger correlation windows containing smaller correlation windows;
- rejecting the homologous radius of curvature points (40, 41) meeting a rejection condition after interpolation of the second image (2);
- iteratively adding, in the disparity map corresponding to the current level of resolution, missing position difference points as a function of the existing position difference points;
- smoothing the disparity map corresponding to the current level of resolution via a convolution window; and
- compiling the disparity map computed for the current level of resolution from the disparity map computed for the preceding level of resolution so as to update said disparity map computed for the preceding level of resolution.

**18.** Procedure according to Claim 17, **characterized in that** the step of rejecting the homologous points meeting a rejection condition consist, for the current point, in:

- computing, in the first image (1), the curvatures of its two neighboring points along each processing direction;
- computing the smaller difference of the curvatures of the four points associated with the current point in the first image;
- computing, in the second image, its homologous point interpolated via the disparity map;
- computing the difference between its curvature and that of the homologous point; and
- rejecting the homologous point if this difference is greater than the computed smaller difference on the first image.

**19.** Procedure according to one of Claims 7 to 18, **characterized in that** the step of generating the disparity map for the finest level of resolution comprises the generation of:

- at least one table representative of the map of the disparities along each processing direction; and
- at least one table representative of a map of the correlation window sizes employed at any unrejected point in the first image, along each processing direction.

**20.** Procedure according to one of Claims 7 to 19, **characterized in that** the convolution and correlation windows used are convolution and correlation windows of the prolate type.

**21.** Unit for the acquisition and matching of a stereopair of images (1, 2), comprising a system for processing a stereopair of images according to one of Claims 1 to 6, **characterized in that** it further comprises a system for the acquisition of the stereopair, comprising a single acquisition instrument (30) comprising two CCD sensors (31, 32) in the optical focal plane, each CCD sensor (31, 32) allowing the acquisition of one image (1, 2), the acquisition system being designed to operate with stereoscopic coefficients of less than 0.1.

**Patentansprüche**

**1.** Behandlungssystem für eine Einheit zur Erfassung und zum Vergleich eines stereoskopischen Bilderpaars (1, 2), umfassend ein System zur Erfassung eines stereoskopischen Bilderpaars mit einem stereoskopischen Koeffizienten

**EP 1 756 771 B1**

von weniger als 0,1 und das Behandlungssystem des erfassten stereoskopischen Paars,
**dadurch gekennzeichnet, dass** das Behandlungssystem Folgendes umfasst:

- Mittel, die dazu geeignet sind, die zwei Bilder (1, 2) des stereoskopischen Paars gemäß mindestens einer Behandlungsrichtung und gemäß verschiedener Auflösungsniveaus vom gröbsten zum feinsten zu behandeln, wobei die Behandlungsmittel Mittel umfassen, die bei jeder Änderung des Auflösungsniveaus dazu geeignet sind:

-- an jedem Punkt des ersten Bildes (1) ein optimales Korrelationsfenster (3) zu bilden,
-- durch die Korrelation mit den vorbestimmten Korrelationsfenstern die Positionsabweichungen zwischen jedem Punkt (40) des ersten Bildes (1) und seinem radiometrischen Homolog (41) im zweiten Bild (2) zu berechnen,
-- für das laufende Korrelationsniveau eine Karte der Positionsabweichungen zwischen jedem Punkt (40) des ersten Bildes und seinem radiometrischen Homolog (41) im zweiten Bild zu erhalten,
-- eine baryzentrische Registrierung der Punkte der erhaltenen Karte, indem für jeden Punkt der Karte Folgendes durchgeführt wird:

--- die Bestimmung des Baryzentrums G der Punkte des ersten Bildes, enthalten im optimalen Korrelationsfenster, verbunden mit dem in Betracht gezogenen Punkt der Karte,
--- die Zuweisung des Wertes der Positionsabweichung des in Betracht gezogenen Punkts der Karte zu diesem Baryzentrum und
-- die Mittel, die dazu in der Lage sind, für das laufende Auflösungsniveau eine Karte der Positionsabweichungen zu erhalten, die den Erhalt durch das feinste Auflösungsniveau der Karte der Positionsabweichungen zwischen jedem Punkt des ersten Bildes (1) und seinem radiometrischen Homolog im zweiten Bild (2) ermöglicht.

2. Behandlungssystem nach Anspruch 1, **dadurch gekennzeichnet, dass** die Mittel, die dazu in der Lage sind, die zwei Bilder des Paars zu behandeln, außerdem Folgendes umfassen:

- Mittel, die dazu in der Lage sind, eine Faltung der Bilder (1, 2) des Paars durch ein Faltungsfenster durchzuführen,
- Mittel, die dazu in der Lage sind, einen Zoom der Größe 2 der Bilder (1, 2) des stereoskopischen Paars durchzuführen.

3. Behandlungssystem nach Anspruch 1 oder Anspruch 2, **dadurch gekennzeichnet, dass** die Mittel, die dazu in der Lage sind, das optimale Korrelationsfenster an jedem Punkt des ersten Bildes zu bilden, Folgendes umfassen:

- Mittel, die dazu in der Lage sind, eine Krümmung des ersten Bildes für jede Größe des Korrelationsfensters (3) zu berechnen,
- Mittel, die dazu in der Lage sind, eine Krümmung des Geräuschbildes für jede Größe des Korrelationsfensters (3) zu berechnen,
- Mittel, die dazu in der Lage sind, für jede Größe des Korrelationsfensters das Verhältnis (SNRc) der vorhergehenden Krümmungen zu berechnen,

und Mittel, die dazu in der Lage sind, die kleinste Größe des Korrelationsfensters zu wählen, so dass das Verhältnis größer als ein Vollständigkeitsparameter, eingegeben vom Benutzer, ist.

4. Behandlungssystem nach einem der vorhergehenden Ansprüche, **dadurch gekennzeichnet, dass** die Mittel, die dazu in der Lage sind, die zwei Bilder zu behandeln, außerdem Mittel umfassen, die dazu in der Lage sind, eine Interpolation des zweiten Bildes (2) dank einer Karte der Positionsabweichungen, erhalten für ein vorhergehendes Auflösungsniveau, durchzuführen.

5. Behandlungssystem nach Anspruch 4, **dadurch gekennzeichnet, dass** die Mittel, die dazu in der Lage sind, die zwei Bilder zu behandeln, außerdem Folgendes umfassen:

- Mittel, die dazu in der Lage sind, die homologen Punkte (40, 41), stammend aus Korrelationsfenstern (3) mit den größten Größen und enthaltend Korrelationsfenster (3) mit den kleinsten Größen, zurückzuweisen,
- Mittel, die dazu in der Lage sind, die homologen Punkte (40, 41) von Krümmungsradien zurückzuweisen, nachweisend einen Zustand der Zurückweisung nach der Interpolation des zweiten Bildes (2).

- Mittel, die dazu in der Lage sind, in der Karte der Positionsabweichungen, die dem laufenden Auflösungsniveau entspricht, unvollständige Punkte von Positionsabweichungen je nach den vorhandenen Punkten von Positionsabweichungen, wiederholt zu vervollständigen,
- Mittel, die dazu in der Lage sind, die Karte der Positionsabweichungen, die dem laufenden Auflösungsniveau entspricht, durch ein Faltungsfenster zu glätten,
- Mittel, die dazu in der Lage sind, die Karte der Positionsabweichungen, berechnet für das laufende Auflösungsniveau, mit der Karte der Positionsabweichungen, berechnet für das vorhergehende Auflösungsniveau, zusammenzusetzen, um die Karte der Positionsabweichungen, berechnet für das vorhergehende Auflösungsniveau, zu aktualisieren.

6. Behandlungssystem nach einem der vorhergehenden Ansprüche, **dadurch gekennzeichnet, dass** es außerdem Mittel umfasst, die dazu in der Lage sind, die homologen Punkte zurückzuweisen, nachweisend einen Zustand der Zurückweisung, wobei die Mittel, die dazu in der Lage sind, die homologen Punkte zurückzuweisen, Folgendes umfassen:

- Mittel die, für den laufenden Punkt, dazu in der Lage sind, ausgehend vom ersten Bild (1) die Krümmungen seiner beiden benachbarten Punkte gemäß jeder Behandlungsrichtung zu berechnen,
- Mittel die, für den laufenden Punkt, dazu in der Lage sind, die untere Abweichung der Krümmungen der 4 Verbindungen zum laufenden Punkt des ersten Bildes (1) zu berechnen,
- Mittel die, für den ersten Punkt, dazu in der Lage sind, im zweiten Bild (2), seinen homologen Punkt zu berechnen, der von der Karte der Positionsabweichungen interpoliert wurde,
- Mittel die, für den laufenden Punkt, dazu in der Lage sind, die Abweichung zwischen seiner Krümmung und derjenigen des homologen Punkts zu berechnen,
- Mittel die, für den laufenden Punkt, dazu in der Lage sind, den homologen Punkt zurückzuweisen, wenn diese Abweisung größer als die untere Abweichung, berechnet ausgehend vom ersten Bild (1), ist.

7. Verfahren um Vergleich eines stereoskopischen Paars von Bildern mit einem stereoskopischen Koeffizienten von weniger als 0,1, **dadurch gekennzeichnet, dass** er die folgenden Schritte umfasst:

- Behandeln, dank Behandlungsmitteln, der zwei Bilder (1, 2) des stereoskopischen Paars gemäß mindestens einer Behandlungsrichtung und gemäß verschiedener Auflösungsniveaus vom gröbsten zum feinsten, durch, für jede Änderung des Auflösungsniveaus:

-- Bestimmen, an jedem Punkt des ersten Bildes (1), eines optimalen Korrelationsfensters (3),
-- Berechnen, durch die Korrelation mit den vorbestimmten Korrelationsfenstern, der Positionsabweichungen zwischen jedem Punkt (40) des ersten Bildes (1) und seinem radiometrischen Homolog (41) im zweiten Bild (2),
-- Erhalten, für das laufende Auflösungsniveau, einer Karte der Positionsabweichungen zwischen jedem Punkt (40) des ersten Bildes und seinem radiometrischen Homolog (41) im zweiten Bild,
-- Durchführen einer baryzentrischen Registrierung der Punkte der erhaltenen Karte, die für jeden Punkt der Karte Folgendes durchführt:

--- die Bestimmung des Baryzentrums und der Punkte des ersten Bildes, enthalten im optimalen Korrelationsfenster, verbunden mit dem in Betracht gezogenen Punkt der Karte,
--- die Zuweisung des Wertes der Positionsabweichung des in Betracht gezogenen Punkts der Karte zu diesem Baryzentrum

- Erhalten, für das feinste Auflösungsniveau, der Karte der Positionsabweichungen zwischen jedem Punkt des ersten Bildes (1) und seinem radiometrischen Homolog im zweiten Bild (2).

8. Verfahren nach Anspruch 7, **dadurch gekennzeichnet, dass** es außerdem den folgenden Schritt umfasst:

- Erfassung eines stereoskopischen Paars von Bildern (1, 2) durch ein einziges Erfassungsinstrument (30), das dazu vorgesehen ist, mit stereoskopischen Koeffizienten einiger Zentimeter zu funktionieren und zwei CCD-Sensoren (31, 32) auf der optischen Fokusebene (19') umfasst, wobei jeder Sensor (31) die Erfassung eines Bildes (1) des Paars ermöglicht.

9. Verfahren nach Anspruch 7 oder Anspruch 8, **dadurch gekennzeichnet, dass** es einen Schritt umfasst, der darin besteht, dank Behandlungsmitteln die zwei Bilder (1, 2) des stereoskopischen Paars gemäß einer epipolaren Richtung zu behandeln.

10. Verfahren nach einem der Ansprüche 7 bis 9, **dadurch gekennzeichnet, dass** es einen Schritt umfasst, der darin besteht, dank Behandlungsmitteln die zwei Bilder (1, 2) des stereoskopischen Paars gemäß einer epipolaren Richtung und einer orthogonalen Richtung zur epipolaren Richtung zu behandeln.

11. Verfahren nach einem der Ansprüche 7 bis 10, **dadurch gekennzeichnet, dass** es außerdem einen Schritt der Eingabe durch einen Benutzer mindestens eines Ausschließlichkeitsparameters umfasst, der der Wahl eines Korrelations-Rauschabstands gemäß jeder Behandlungsrichtung entspricht.

12. Verfahren nach einem der Ansprüche 7 bis 11, **dadurch gekennzeichnet, dass** es außerdem die Schritte zur Erfassung des Folgenden umfasst:

   - eines Geräuschbildes,
   - der Art des Korrelationsfensters,
   - einer epipolaren Richtung für jedes Bild (1, 2) des Paars für einen mittleren stereoskopischen Koeffizienten
   - mindestens eines Werts der maximalen Positionsabweichung gemäß jeder Behandlungsrichtung

13. Verfahren nach Anspruch 12, **dadurch gekennzeichnet, dass** das Verfahren außerdem einen Schritt der Vorbehandlung der Daten umfasst, bestehend aus:

   - Berechnen einer Anzahl von Auflösungsniveaus gemäß jeder Behandlungsrichtung in Abhängigkeit von jedem maximalen Wert der Positionsabweichung,
   - Filtern der Bilder (1, 2) des stereoskopischen Paars von Bildern durch Falten mit einem Faltungsfenster,
   - Filtern des Geräuschbildes durch Falten mit dem Faltungsfenster,
   - Interpolieren des stereoskopischen Paars von Bildern in einer epipolaren Geometrie.

14. Verfahren nach einem der Ansprüche 7 bis 13, **dadurch gekennzeichnet, dass** der Schritt der Behandlung der Bilder außerdem die Schritte umfasst, bestehend aus:

   - Durchführen einer Faltung der Bilder (1, 2) des Paars durch ein Faltungsfenster,
   - Durchführen eines Zooms der Größe 2 der Bilder (1, 2) des stereoskopischen Paars.

15. Verfahren nach Anspruch 11, **dadurch gekennzeichnet, dass** der Schritt des Bildens des optimalen Korrelationsfensters für jeden Punkt des ersten Bildes aus Folgendem besteht:

   - Berechnen einer Krümmung des ersten Bildes für jede Größe des Korrelationsfensters (3),
   - Berechnen einer Krümmung des Geräuschbildes für jede Größe des Korrelationsfensters (3),
   - Berechnen, für jede Größe des Korrelationsfensters, des Verhältnisses (SNRc) der vorhergehenden Krümmungen,

   und Auswählen der kleinsten Größe des Korrelationsfensters, so dass das Verhältnis größer als jeder Vollständigkeitsparameter, eingegeben vom Benutzer, ist.

16. Verfahren nach einem der Ansprüche 7 bis 15, **dadurch gekennzeichnet, dass** der Schritt des Behandelns der Bilder außerdem einen Schritt umfasst, der darin besteht, eine Interpolation des zweiten Bildes (2) dank einer Karte der Positionsabweichungen, erhalten für ein vorhergehendes Auflösungsniveau, durchzuführen.

17. Verfahren nach Anspruch 16, **dadurch gekennzeichnet, dass** der Schritt des Behandelns der Bilder außerdem die Schritte umfasst, bestehend aus:

   - Zückweisen der homologen Punkte, stammend aus Korrelationsfenstern der größten Größen und enthaltend Korrelationsfenster der kleinsten Größen,
   - Zurückweisen der homologen Punkte (40, 41) von Krümmungsradien, nachweisend einen Zustand der Zurückweisung nach der Interpolation des zweiten Bildes (2),
   - wiederholtes vervollständigen, in der Karte der Positionsabweichungen, die dem laufenden Auflösungsniveau entspricht, der unvollständigen Punkte von Positionsabweichungen, je nach den vorhandenen Punkten der Positionsabweichungen,

- Glätten der Karte der Positionsabweichungen, die dem laufenden Auflösungsniveau entspricht, durch ein Faltungsfenster,

- Zusammensetzen der Karte der Positionsabweichungen, berechnet für das laufende Auflösungsniveau, mit der Karte der Positionsabweichungen, berechnet für das vorhergehende Auflösungsniveau, um die Karte der Positionsabweichungen, berechnet für das vorhergehende Auflösungsniveau, zu aktualisieren.

18. Verfahren nach Anspruch 17, **dadurch gekennzeichnet, dass** der Schritt des Zurückweisens der homologen Punkte, nachweisend einen Zustand des Zurückweisens, für den laufenden Punkt besteht aus:

- Berechnen, ausgehend vom ersten Bild (1), der Krümmungen seiner beiden benachbarten Punkte gemäß jeder Behandlungsrichtung,
- Berechnen der unteren Abweichung der Krümmungen der 4 Verbindungen mit dem laufenden Punkt des ersten Bildes,
- Berechnen, im zweiten Bild (2), seines homologen Punkts, der von der Karte der Positionsabweichungen interpoliert wurde,
- Berechnen der Abweichung zwischen seiner Krümmung und derjenigen des homologen Punkts,
- Zurückweisen des homologen Punkts, wenn diese Abweisung größer als die untere Abweichung, berechnet ausgehend vom ersten Bild, ist.

19. Verfahren nach einem der Ansprüche 7 bis 18, **dadurch gekennzeichnet, dass** der Schritt des Erhaltens, für das feinste Auflösungsniveau, der Karte der Positionsabweichungen, den Erhalt des Folgenden umfasst:

- mindestens einer Tafel, die die Karte der Positionsabweichungen gemäß jeder Behandlungsrichtung darstellt,
- mindestens eine Tafel, die eine Karte der Größen der Korrelationsfenster darstellt, die an jedem nicht zurückgewiesenen Punkt des ersten Bildes gemäß jeder Behandlungsrichtung angewendet werden.

20. Verfahren nach einem der Ansprüche 7 bis 19, **dadurch gekennzeichnet, dass** die verwendeten Faltungs-und Korrelationsfenster Faltungs- und Korrelationsfenster des Typs Prolata sind.

21. Einheit zur Erfassung und zum Vergleich eines stereoskopischen Bilderpaars (1, 2), umfassend ein System zur Behandlung eines stereoskopischen Bilderpaars nach einem der Ansprüche 1 bis 6, **dadurch gekennzeichnet, dass** sie außerdem ein System zur Erfassung des stereoskopischen Paars umfasst, umfassend ein einziges Erfassungsinstrument (30), umfassend zwei CCD-Sensoren (31, 32) auf der optischen Fokusebene, wobei jeder CCD-Sensor (31, 32) die Erfassung eines Bildes (1, 2) ermöglicht, wobei das System zur Erfassung dazu vorgesehen ist, mit stereoskopischen Koeffizienten von weniger als 0,1 zu funktionieren.

FIG_1

FIG. 2

# FIG.3

FIG.4

FIG.5

FIG.6

20

21

22

23

FIG_7

Variation de la précision en altitude en fonction du B/H

FIG.8

EP 1 756 771 B1

FIG.9

FIG_10

FIG.11

FIG.12

**RÉFÉRENCES CITÉES DANS LA DESCRIPTION**

**Documents brevets cités dans la description**

- US 5963664 A
- US 5995681 A
- US 2002135468 A
- EP 0037530 A